# EUROPEAN PATENT APPLICATION

(11) **EP 2 061 155 A2**
(43) Date of publication of application: **20.05.2009**
(21) Application number: 08019368.3
(22) Date of filing: 05.11.2008
(51) Int. Cl.: H04B 1/38

(54) **High frequency electronic component**

(30) Priority: 15.11.2007 JP 2007296962; 13.03.2008 JP 2008064745
(71) Applicant: TDK Corporation, Chuo-ku, Tokyo 103-8272 (JP)
(72) Inventor: Goi, Tomoyuki, Tokyo 103-8272 (JP); Nagai, Kenta, Tokyo 103-8272 (JP); Harada, Nobumi, Tokyo 103-8272 (JP); Miura, Mitsuru, Tokyo 103-8272 (JP)
(74) Representative: Grünecker, Kinkeldey, Stockmair & Schwanhäusser Anwaltssozietät

(57) **Abstract**

A high frequency electronic component includes: a first input terminal that receives a first transmission signal in the form of an unbalanced signal; a second input terminal that receives a second transmission signal in the form of a balanced signal; a balun that converts the second transmission signal in the form of a balanced signal received at the second input terminal to a second transmission signal in the form of an unbalanced signal and outputs this signal; and a switch. The switch performs switching between a signal received at a first input port and a signal received at a second input port, and outputs one of the signals from an output port. The first input port receives the first transmission signal received at the first input terminal. The second input port receives the second transmission signal in the form of an unbalanced signal outputted from the balun. The output port is connected to a power amplifier.

## Description

### BACKGROUND OF THE INVENTION

### 1. Field of the Invention

The present invention relates to a high frequency electronic component for use in a transmission circuit that processes a plurality of transmission signals.

### 2. Description of the Related Art

Recently, cellular phones capable of operating in a plurality of frequency bands (multi-bands) have been put to practical use. The third-generation cellular phones having a high-rate data communication function have also been widely used. Accordingly, multi-mode and multi-band capability is demanded of cellular phones.

For example, cellular phones conforming to the time division multiple access (TDMA) system and having multi-band capability are in practical use. Cellular phones conforming to the wide-band code division multiple access (WCDMA) system are also in practical use. Under the circumstances, multi-mode- and multi-band-capable cellular phones having communication functions for both the TDMA system and the WCDMA system are demanded in order to make WCDMA communications available while capitalizing on the existing infrastructure of the TDMA system. For example, in Europe it is demanded that cellular phones of the global system for mobile communications (GSM), which is based on the TDMA system, be capable of performing communications under the universal mobile telecommunications system (UMTS), which is based on the WCDMA system.

In a transmission circuit that performs processing of transmission signals in a wireless communication apparatus such as a cellular phone, a power amplifier for amplifying the transmission signals is an essential component. The power amplifier is more expensive than other electronic components constituting the transmission circuit.

Conventionally, in a multi-band-capable GSM cellular phone, a single power amplifier is used in common for two frequency bands close to each other. In a multi-mode-capable cellular phone having communication functions for both the GSM system and the UMTS, however, a single power amplifier is not shared between the GSM system and the UMTS. In a multi-mode- and multi-band-capable cellular phone having communication functions for one or more bands of the GSM system and a plurality of bands of the UMTS, a single power amplifier is not shared between the plurality of bands of the UMTS.

JP-A-2006-186956 discloses a wireless communication apparatus having a multi-mode transmission circuit for selectively switching between the TDMA mode and the code division multiple access (CDMA) mode. This publication also discloses a technique of connecting a switch to an input terminal of a power amplifier and inputting a plurality of kinds of transmission signals selectively to the power amplifier by using the switch.

JP-A-2003-143033 discloses a high frequency switch module including a switch circuit for switching between a transmission path and a reception path, a balun transformer circuit connected to the transmission path, and a balun transformer circuit connected to the reception path.

In a cellular phone capable of operating under the GSM system and the UMTS, in many cases, an integrated circuit that mainly performs modulation and demodulation of signals generates a GSM transmission signal in the form of a balanced signal and a UMTS transmission signal in the form of an unbalanced signal. In such a cellular phone, the GSM transmission signal in the form of a balanced signal and the UMTS transmission signal in the form of an unbalanced signal are inputted to the transmission circuit. In the transmission circuit, conventionally, the GSM transmission signal and the UMTS transmission signal are amplified by different power amplifiers. The transmission circuit thus requires a plurality of power amplifiers, each of which is relatively expensive as previously mentioned, and this impedes reductions in size and cost of the cellular phone.

The technique disclosed in JP-A-2006-186956 deals with only a transmission signal in the form of an unbalanced signal, and no consideration is given to a case where a transmission signal in the form of a balanced signal and a transmission signal in the form of an unbalanced signal both exist as described above.

### OBJECT AND SUMMARY OF THE INVENTION

It is an object of the present invention to provide a high frequency electronic component for use in a transmission circuit that processes a plurality of transmission signals, the high frequency electronic component allowing reductions in size and cost of the transmission circuit by reducing the number of power amplifiers to be included in the transmission circuit.

A first high frequency electronic component of the present invention is for use in a transmission circuit that processes a plurality of transmission signals, the high frequency electronic component including: a first input terminal that receives a first transmission signal in the form of an unbalanced signal; a second input terminal that receives a second transmission signal in the form of a balanced signal; a balun that converts the second transmission signal in the form of a balanced signal received at the second input terminal to a second transmission signal in the form of an unbalanced signal and outputs this signal; and a switch. The switch has a first input port, a second input port and an output port. The switch performs switching between a signal received at the first input port and a signal received at the second input port, and outputs one of the signals from the output port. The first input port receives the first transmission signal received at the first input terminal, and the second input port receives the second transmission signal in the form of an unbalanced signal outputted from the balun. The output port is connected to a power amplifier that amplifies the signal outputted from the output port.

According to the first high frequency electronic component of the present invention, the balun converts the second transmission signal in the form of a balanced signal received at the second input terminal to a second transmission signal in the form of an unbalanced signal. The switch performs switching between the first transmission signal in the form of an unbalanced signal received at the first input terminal and the second transmission signal in the form of an unbalanced signal outputted from the balun, and outputs one of the first and second transmission signals from the output port to the power amplifier.

The first high frequency electronic component of the present invention may further include the power amplifier, or may further include a band-pass filter provided between the first input terminal and the first input port.

The first high frequency electronic component of the present invention may further include a capacitor provided in at least one of signal paths that are respectively connected to the first input port, the second input port and the output port.

The first high frequency electronic component of the present invention may further include a layered substrate including a plurality of dielectric layers stacked. The layered substrate may further include a plurality of conductor layers provided within the layered substrate. The balun may be formed using the plurality of conductor layers, and the switch may be mounted on the layered substrate.

A second high frequency electronic component of the present invention is for use in a transmission circuit that processes a plurality of transmission signals, the high frequency electronic component including: a first input terminal that receives a first transmission signal in the form of an unbalanced signal; a second input terminal that receives a second transmission signal in the form of a balanced signal; a balun that converts the first transmission signal in the form of an unbalanced signal received at the first input terminal to a first transmission signal in the form of a balanced signal and outputs this signal; and a switch. The switch has a first input port, a second input port and an output port. The switch performs switching between a signal received at the first input port and a signal received at the second input port, and outputs one of the signals from the output port. The first input port receives the first transmission signal in the form of a balanced signal outputted from the balun, and the second input port receives the second transmission signal received at the second input terminal. The output port is connected to a power amplifier that amplifies the signal outputted from the output port.

According to the second high frequency electronic component of the present invention, the balun converts the first transmission signal in the form of an unbalanced signal received at the first input terminal to a first transmission signal in the form of a balanced signal. The switch performs switching between the first transmission signal in the form of a balanced signal outputted from the balun and the second transmission signal in the form of a balanced signal received at the second input terminal, and outputs one of the first and second transmission signals from the output port to the power amplifier.

The second high frequency electronic component of the present invention may further include the power amplifier, or may further include a band-pass filter provided between the first input terminal and the balun.

The second high frequency electronic component of the present invention may further include a capacitor provided in at least one of signal paths that are respectively connected to the first input port, the second input port and the output port.

The second high frequency electronic component of the present invention may further include a layered substrate including a plurality of dielectric layers stacked. The layered substrate may further include a plurality of conductor layers provided within the layered substrate. The balun may be formed using the plurality of conductor layers, and the switch may be mounted on the layered substrate.

According to the first high frequency electronic component of the present invention, the balun converts the second transmission signal in the form of a balanced signal received at the second input terminal to a second transmission signal in the form of an unbalanced signal, and the switch performs switching between the first transmission signal in the form of an unbalanced signal received at the first input terminal and the second transmission signal in the form of an unbalanced signal outputted from the balun, and outputs one of the first and second transmission signals from the output port to the power amplifier. Consequently, the first high frequency electronic component of the present invention allows a reduction in the number of power amplifiers to be included in a transmission circuit that processes a transmission signal in the form of a balanced signal and a transmission signal in the form of an unbalanced signal. This allows reductions in size and cost of the transmission circuit.

According to the second high frequency electronic component of the present invention, the balun converts the first transmission signal in the form of an unbalanced signal received at the first input terminal to a first transmission signal in the form of a balanced signal, and the switch performs switching between the first transmission signal in the form of a balanced signal outputted from the balun and the second transmission signal in the form of a balanced signal received at the second input terminal, and outputs one of the first and second transmission signals from the output port to the power amplifier. Consequently, the second high frequency electronic component of the present invention allows a reduction in the number of power amplifiers to be included in a transmission circuit that processes a transmission signal in the form of a balanced signal and a transmission signal in the form of an unbalanced signal. This allows reductions in size and cost of the transmission circuit.

Other and further objects, features and advantages of the invention will appear more fully from the following description.

### BRIEF DESCRIPTION OF THE DRAWINGS

FIG. 1 is a block diagram illustrating the circuit configuration of an example of a high frequency circuit of a cellular phone including a high frequency electronic component of a first embodiment of the invention.
FIG. 2 is a block diagram illustrating the circuit configuration of a transmission circuit of the high frequency circuit shown in FIG. 1.
FIG. 3 is a schematic diagram illustrating the circuit configuration of the high frequency electronic component of the first embodiment of the invention.
FIG. 4 is a perspective view of the high frequency electronic component of the first embodiment of the invention.
FIG. 5 is a top view of the high frequency electronic component of the first embodiment of the invention.
FIG. 6A and FIG. 6B are illustrative views respectively showing the top surfaces of first and second dielectric layers of the layered substrate shown in FIG. 4.
FIG. 7A and FIG. 7B are illustrative views respectively showing the top surfaces of third and fourth dielectric layers of the layered substrate shown in FIG. 4.
FIG. 8A and FIG. 8B are illustrative views respectively showing the top surfaces of fifth and sixth dielectric layers of the layered substrate shown in FIG. 4.
FIG. 9A and FIG. 9B are illustrative views respectively showing the top surfaces of seventh and eighth dielectric layers of the layered substrate shown in FIG. 4.
FIG. 10A and FIG. 10B are illustrative views respectively showing the top surface of a ninth dielectric layer of the layered substrate shown in FIG. 4, and a conductor layer below the ninth dielectric layer.
FIG. 11 is a block diagram illustrating a high frequency circuit of a comparative example against the high frequency circuit of the first embodiment of the invention.
FIG. 12 is a schematic diagram illustrating another possible configuration of a balun of the first embodiment of the invention.
FIG. 13 is a block diagram illustrating a first to a third modification example of the high frequency electronic component of the first embodiment of the invention.
FIG. 14 is a block diagram illustrating a transmission circuit including a high frequency electronic component of a second embodiment of the invention.
FIG. 15 is a block diagram illustrating a transmission circuit of a comparative example against the transmission circuit of the second embodiment of the invention.
FIG. 16 is a block diagram illustrating a transmission circuit including a high frequency electronic component of a third embodiment of the invention.
FIG. 17 is a block diagram illustrating a transmission circuit including a high frequency electronic component of a fourth embodiment of the invention.
FIG. 18 is a block diagram illustrating a transmission circuit of a comparative example against the transmission circuit of the fourth embodiment of the invention.
FIG. 19 is a block diagram illustrating a transmission circuit including a high frequency electronic component of a fifth embodiment of the invention.
FIG. 20 is a block diagram illustrating a transmission circuit of a comparative example against the transmission circuit of the fifth embodiment of the invention.
FIG. 21 is a block diagram illustrating a transmission circuit including a high frequency electronic component of a sixth embodiment of the invention.
FIG. 22 is a block diagram illustrating a transmission circuit including a high frequency electronic component of a seventh embodiment of the invention.
FIG. 23 is a block diagram illustrating a transmission circuit of a comparative example against the transmission circuit of the seventh embodiment of the invention.
FIG. 24 is a block diagram illustrating a transmission circuit including a high frequency electronic component of an eighth embodiment of the invention.
FIG. 25 is a block diagram illustrating a transmission circuit of a comparative example against the transmission circuit of the eighth embodiment of the invention.

### DETAILED DESCRIPTION OF THE PREFERRED EMBODIMENTS

### [First Embodiment]

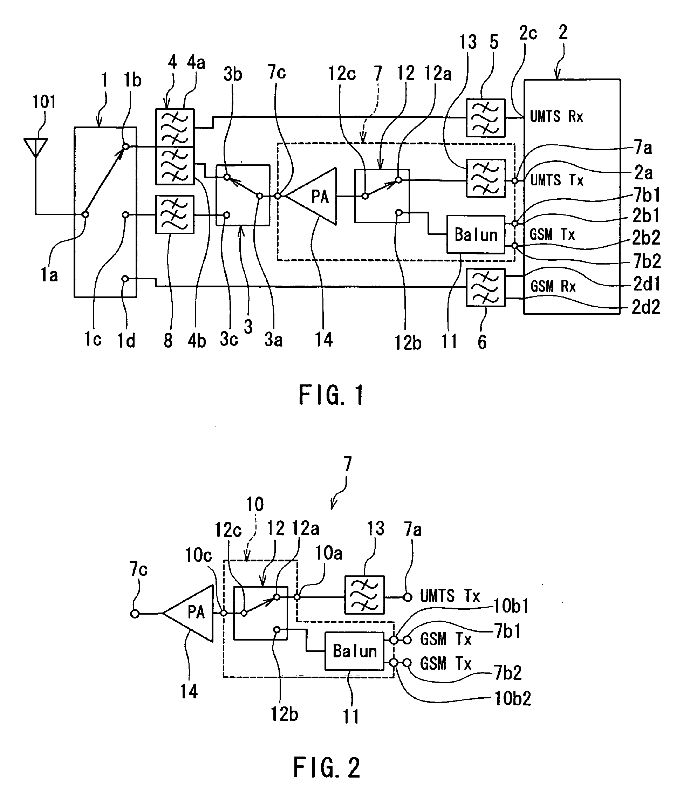

Preferred embodiments of the present invention will now be described in detail with reference to the drawings. Reference is first made to FIG. 1 to describe an example of a high frequency circuit of a cellular phone including a high frequency electronic component of a first embodiment of the invention. FIG. 1 is a block diagram illustrating the circuit configuration of this example of high frequency circuit. This high frequency circuit processes a signal of the GSM system, which is based on the TDMA system, and a signal of the UMTS, which is based on the WCDMA system.

Table 1 shows the types of GSM signals, and Table 2 shows the types of UMTS signals. In Tables 1 and 2 the "Uplink" columns show the frequency bands of transmission signals, and the "Downlink" columns show the frequency bands of reception signals.

**[Table 1]**

| System | Frequency band | Uplink (MHz) | Downlink (MHz) |
|---|---|---|---|
| GSM850 (AGSM) | 850 MHz band | 824 - 849 | 869 - 894 |
| GSM900 (EGSM) | 900 MHz band | 880 - 915 | 925 - 960 |
| GSM1800 (DCS) | 1800 MHz band | 1710 - 1785 | 1805 - 1880 |
| GSM1900 (PCS) | 1900 MHz band | 1850 - 1910 | 1930 - 1990 |

**[Table 2]**

| Band | Frequency band | Uplink (MHz) | Downlink (MHz) |
|---|---|---|---|
| I | 2100 MHz band | 1920 - 1980 | 2110 - 2170 |
| II | 1900 MHz band | 1850 - 1910 | 1930 - 1990 |
| III | 1800 MHz band | 1710 - 1785 | 1805 - 1880 |
| IV | 1700 MHz band | 1710 - 1755 | 2110 - 2155 |
| V | 850 MHz band | 824 - 849 | 869 - 894 |
| VI | 850 MHz band | 830 - 840 | 875 - 885 |
| VII | 2600 MHz band | 2500 - 2570 | 2620 - 2690 |
| VIII | 900 MHz band | 880 - 915 | 925 - 960 |
| IX | 1800 MHz band | 1749.9 - 1784.9 | 1844.9 - 1879.9 |
| X | 1700 MHz band | 1710 - 1770 | 2110 - 2170 |

The high frequency circuit shown in FIG. 1 includes an antenna 101, a switch 1, and an integrated circuit (hereinafter, IC) 2. The switch 1 has four ports 1a, 1b, 1c and 1d, and connects the port 1a selectively to one of the ports 1b, 1c and 1d. The port 1a is connected to the antenna 101.

The IC 2 is a circuit that mainly performs modulation and demodulation of signals. In the present embodiment, the IC 2 generates and outputs a UMTS transmission signal UMTS Tx and a GSM transmission signal GSM Tx. The transmission signal UMTS Tx outputted by the IC 2 is in the form of an unbalanced signal. The transmission signal GSM Tx outputted by the IC 2 is in the form of a balanced signal. The IC 2 receives a UMTS reception signal UMTS Rx and a GSM reception signal GSM Rx. The reception signal UMTS Rx received by the IC 2 is in the form of an unbalanced signal. The reception signal GSM Rx received by the IC 2 is in the form of a balanced signal. The IC 2 has terminals 2a, 2b1, 2b2, 2c, 2d1 and 2d2. The transmission signal UMTS Tx is outputted from the terminal 2a, and the transmission signal GSM Tx is outputted from the terminals 2b1 and 2b2. The reception signal UMTS Rx is received at the terminal 2c, and the reception signal GSM Rx is received at the terminals 2d1 and 2d2.

The transmission signal GSM Tx and the reception signal GSM Rx are a transmission signal and a reception signal of at least one of GSM850 (AGSM) and GSM900 (EGSM), which are two of the four systems shown in Table 1 and are close to each other in frequency band, or at least one of GSM1800 (DCS) and GSM1900 (PCS), which are the other two of the four systems shown in Table 1 and are close to each other in frequency band. In the present embodiment, in the case where the transmission signal GSM Tx and the reception signal GSM Rx are a transmission signal and a reception signal of at least one of GSM850 (AGSM) and GSM900 (EGSM), the transmission signal UMTS Tx and the reception signal UMTS Rx are a transmission signal and a reception signal of one of the bands V, VI and VIII, the frequency bands of which are close to those of GSM850 (AGSM) and GSM900 (ESGM), among the 10 bands shown in Table 2. In the case where the transmission signal GSM Tx and the reception signal GSM Rx are a transmission signal and a reception signal of at least one of GSM1800 (DCS) and GSM1900 (PCS), the transmission signal UMTS Tx and the reception signal UMTS Rx are a transmission signal and a reception signal of one of the bands I, II, III, IV, IX and X, the frequency bands of which are close to those of GSM1800 (DCS) and GSM1900 (PCS), among the 10 bands shown in Table 2.

The high frequency circuit further includes a switch 3, a duplexer 4, a band-pass filter (hereinafter, BPF) 5, a BPF 6, a transmission circuit 7, and a low-pass filter (hereinafter, LPF) 8. The switch 3 has three ports 3a, 3b and 3c, and connects the port 3a selectively to one of the ports 3b and 3c. The port 3c is connected to the port 1c of the switch 1 via the LPF 8.

The duplexer 4 has first to third ports, and two BPFs 4a and 4b. The first port is connected to the port 1b of the switch 1. The BPF 4a is provided between the first and second ports. The BPF 4b is provided between the first and third ports. The second port of the duplexer 4 is connected to the terminal 2c of the IC 2 via the BPF 5. The third port of the duplexer 4 is connected to the port 3b of the switch 3.

The BPF 6 has an unbalanced input and two balanced outputs. The two balanced outputs of the BPF 6 are connected to the terminals 2d1 and 2d2 of the IC 2. The unbalanced input of the BPF 6 is connected to the port 1d of the switch 1.

FIG. 2 shows the circuit configuration of the transmission circuit 7. The transmission circuit 7 processes a plurality of transmission signals, that is, the transmission signal UMTS Tx and the transmission signal GSM Tx. The transmission circuit 7 has inputs 7a, 7b1 and 7b2, and an output 7c. The input 7a is connected to the terminal 2a of the IC 2. The inputs 7b1 and 7b2 are connected to the terminals 2b1 and 2b2 of the IC 2. The output 7c is connected to the port 3a of the switch 3.

The transmission circuit 7 includes a balun 11, a switch 12, a BPF 13, and a power amplifier 14. The balun 11 has two balanced inputs and an unbalanced output. The two balanced inputs of the balun 11 are connected to the inputs 7b1 and 7b2 of the transmission circuit 7. The switch 12 has two input ports 12a and 12b and an output port 12c, and connects the output port 12c selectively to one of the input ports 12a and 12b. The unbalanced output of the balun 11 is connected to the input port 12b of the switch 12. The input port 12a of the switch 12 is connected to the input 7a of the transmission circuit 7 via the BPF 13. The output port 12c of the switch 12 is connected to an input of the power amplifier 14. The power amplifier 14 has an output connected to the output 7c of the transmission circuit 7. The power amplifier 14 amplifies signals outputted from the output port 12c of the switch 12. The high frequency electronic component 10 of the present embodiment is for use in the transmission circuit 7 shown in FIG. 2.

For example, the balun 11 may be formed of an LC circuit comprising an inductor and a capacitor, or may be formed using a resonator. For example, the switch 12 may be formed of a monolithic microwave integrated circuit (hereinafter, MMIC), or may be formed using a PIN diode. The BPF 13 may be formed of a surface acoustic wave element, for example. The power amplifier 14 may be formed of an MMIC, for example.

As shown in FIG. 1, while no BPF is provided in the signal path of the transmission signal GSM Tx, the BPF 13 is provided in the signal path of the transmission signal UMTS Tx. The reason is as follows. For the TDMA system, the transmission signal and the reception signal are time-divided, whereas for the UMTS, the transmission signal and the reception signal are not time-divided. The UMTS therefore requires very high isolation between the transmission signal and the reception signal. To achieve the high isolation, a BPF is typically provided between an IC that outputs a UMTS transmission signal and a power amplifier that amplifies the UMTS transmission signal. For this reason, in the present embodiment, the BPF 13 is provided in the signal path of the transmission signal UMTS Tx between the IC 2 and the power amplifier 14. The LPF 8 provided in the signal path of the transmission signal GSM Tx between the port 3c of the switch 3 and the port 1c of the switch 1 is for suppressing a spurious signal generated at the power amplifier 14 and having a frequency which is an integral multiple of the frequency of the transmission signal.

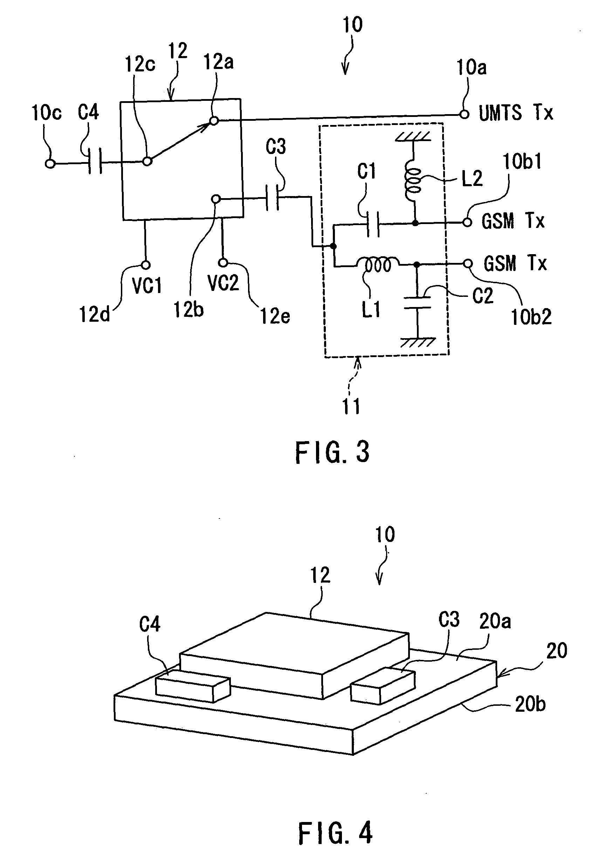

FIG. 3 is a schematic diagram illustrating the circuit configuration of the high frequency electronic component 10. The high frequency electronic component 10 has input terminals 10a, 10b1 and 10b2, an output terminal 10c, and the balun 11 and the switch 12 described above. The input terminal 10a is connected to the output of the BPF 13 and the input port 12a of the switch 12. The input terminals 10b1 and 10b2 are connected to the inputs 7b1 and 7b2 of the transmission circuit 7. The input terminals 10b1 and 10b2 are also connected to the two balanced inputs of the balun 11. The output terminal 10c is connected to the output port 12c of the switch 12 and the input of the power amplifier 14. The switch 12 has control terminals 12d and 12e that receive control signals VC1 and VC2 for controlling the switch 12.

FIG. 3 shows an example in which the balun 11 is formed of an LC circuit comprising an inductor and a capacitor. In this example, the balun 11 has two inductors L1 and L2 and two capacitors C1 and C2. One end of the inductor L1 and one end of the capacitor C1 are connected to the unbalanced output of the balun 11. The other end of the inductor L1 is connected to one of the balanced inputs of the balun 11 connected to the input terminal 10b2, and is also connected to the ground through the capacitor C2. The other end of the capacitor C1 is connected to the other of the balanced inputs of the balun 11 connected to the input terminal 10b1, and is also connected to the ground through the inductor L2.

In the example shown in FIG. 3, the high frequency electronic component 10 includes a capacitor C3 provided in the signal path between the input port 12b of the switch 12 and the unbalanced output of the balun 11, and a capacitor C4 provided in the signal path between the output port 12c of the switch 12 and the output terminal 10c. These capacitors C3 and C4 are provided for preventing direct currents that result from the control signals VC1 and VC2 from flowing into the signal paths connected to the ports 12b and 12c. In the example shown in FIG. 3, no capacitor is provided in the signal path between the input port 12a of the switch 12 and the input terminal 10a. This is because the BPF 13 connected to the input terminal 10a has the function of blocking the passage of direct currents. In the case where direct currents resulting from the control signals VC1 and VC2 are generated from the input port 12a, a capacitor for blocking the passage of the direct currents may be provided in the signal path between the input port 12a of the switch 12 and the input terminal 10a if the BPF 13 does not have the function of blocking the passage of direct currents or if the BPF 13 has a low resistance to direct currents. In the case where there is no need to block the passage of direct currents resulting from the control signals VC1 and VC2 in the signal path connected to the port 12b or the signal path connected to the port 12c, it is not required to provide the capacitor C3 or C4. In each of the signal paths that are respectively connected to the ports 12a, 12b and 12c of the switch 12, a capacitor is provided if it is necessary to block the passage of direct currents resulting from the control signals VC1 and VC2 in the signal path. Whether it is necessary to provide a capacitor in the respective signal paths connected to the ports 12a, 12b and 12c of the switch 12 will be described in detail later. The capacitors C3 and C4 are omitted in FIG. 1 and FIG. 2.

The high frequency electronic component 10 of the present embodiment corresponds to the first high frequency electronic component of the present invention. The transmission signal UMTS Tx in the form of an unbalanced signal in the present embodiment corresponds to the first transmission signal in the first high frequency electronic component of the present invention. The transmission signal GSM Tx in the form of a balanced signal in the present embodiment corresponds to the second transmission signal in the first high frequency electronic component of the present invention. The input terminal 10a corresponds to the first input terminal of the first high frequency electronic component of the present invention. The input terminals 10b1 and 10b2 correspond to the second input terminal of the first high frequency electronic component of the present invention. The balun 11 converts the transmission signal GSM Tx in the form of a balanced signal received at the input terminals 10b1 and 10b2 to a transmission signal GSM TX in the form of an unbalanced signal, and outputs this signal. The input port 12a of the switch 12 receives the transmission signal UMTS Tx in the form of an unbalanced signal received at the input terminal 10a. The input port 12b of the switch 12 receives the transmission signal GSM Tx in the form of an unbalanced signal outputted from the balun 11. The output port 12c of the switch 12 is connected to the power amplifier 14 that amplifies signals outputted from the output port 12c.

The function of the high frequency circuit including the high frequency electronic component 10 of the present embodiment will now be described. The IC 2 generates and outputs the transmission signal UMTS Tx in the form of an unbalanced signal and the transmission signal GSM Tx in the form of a balanced signal. The transmission signal UMTS Tx passes through the BPF 13 of the transmission circuit 7 and is received at the input port 12a of the switch 12 of the high frequency electronic component 10. The transmission signal GSM Tx in the form of a balanced signal is converted by the balun 11 to a transmission signal GSM Tx in the form of an unbalanced signal, and this transmission signal GSM Tx in the form of an unbalanced signal is received at the input port 12b of the switch 12. According to the state of the control signals VC1 and VC2 received at the control terminals 12d and 12e, the switch 12 performs switching between the transmission signal UMTS Tx in the form of an unbalanced signal received at the input port 12a and the transmission signal GSM Tx in the form of an unbalanced signal outputted from the balun 11, and outputs one of the transmission signals to the power amplifier 14. The transmission signal received at the power amplifier 14 is amplified by the power amplifier 14, and enters at the port 3a of the switch 3.

When transmitting the transmission signal UMTS Tx, the port 3a of the switch 3 is connected to the port 3b, and the port 1a of the switch 1 is connected to the port 1b. In this case, the transmission signal UMTS Tx passes in succession through the switch 3, the BPF 4b of the duplexer 4 and the switch 1 into the antenna 101, and is transmitted from the antenna 101.

When transmitting the transmission signal GSM Tx, the port 3a of the switch 3 is connected to the port 3c, and the port 1a of the switch 1 is connected to the port 1c. In this case, the transmission signal GSM Tx passes in succession through the switch 3, the LPF 8 and the switch 1 into the antenna 101, and is transmitted from the antenna 101.

In the high frequency circuit of FIG. 1, processing of the reception signal UMTS Rx is allowed when the port 1a of the switch 1 is connected to the port 1b. When in this state, the reception signal UMTS Rx received at the antenna 101 passes in succession through the switch 1, the BPF 4a of the duplexer 4 and the BPF 5, and enters the IC 2.

In the high frequency circuit of FIG. 1, processing of the reception signal GSM Rx is allowed when the port 1a of the switch 1 is connected to the port 1d. When in this state, the reception signal GSM Rx received at the antenna 101 passes in succession through the switch 1 and the BPF 6, and enters the IC 2.

In the high frequency electronic component 10 of the present embodiment, the balun 11 converts the transmission signal GSM Tx in the form of a balanced signal received at the input terminals 10b1 and 10b2 to the transmission signal GSM Tx in the form of an unbalanced signal, and the switch 12 performs switching between the transmission signal UMTS Tx in the form of an unbalanced signal received at the input terminal 10a and the transmission signal GSM Tx in the form of an unbalanced signal outputted by the balun 11, and outputs one of the transmission signals from the output port 12a to the power amplifier 14. Consequently, according to the present embodiment, it is possible to reduce the number of power amplifiers to be included in the transmission circuit 7 that processes the transmission signal GSM Tx in the form of a balanced signal and the transmission signal UMTS Tx in the form of an unbalanced signal, and it is thereby possible to achieve reductions in size and cost of the transmission circuit 7.

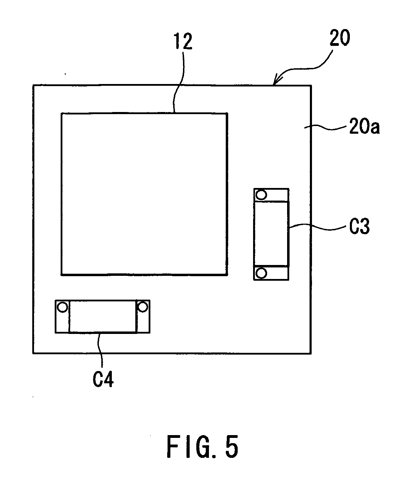

The structure of the high frequency electronic component 10 of the present embodiment will now be described. FIG. 4 is a perspective view showing the outer appearance of the high frequency electronic component 10. FIG. 5 is a top view of the high frequency electronic component 10. As shown in FIG. 4 and FIG. 5, the high frequency electronic component 10 includes a layered substrate 20 for integrating the components of the high frequency electronic component 10. As will be described in detail later, the layered substrate 20 includes a plurality of dielectric layers stacked. The layered substrate 20 is rectangular-solid-shaped, having a top surface 20a, a bottom surface 20b, and four side surfaces.

The circuits of the high frequency electronic component 10 are formed using conductor layers provided within the layered substrate 20, the dielectric layers mentioned above, and elements mounted on the top surface 20a of the layered substrate 20. Here, by way of example, the switch 12 and the capacitors C3 and C4 are mounted on the top surface 20a.

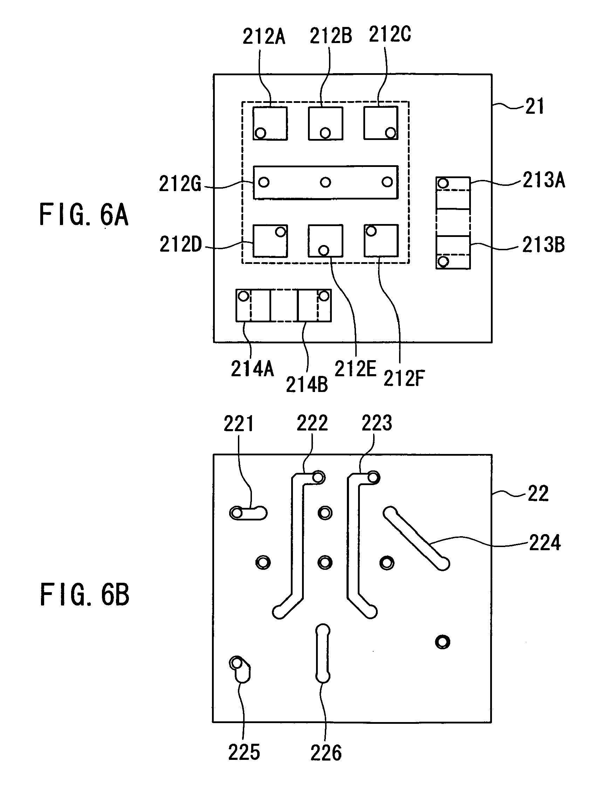

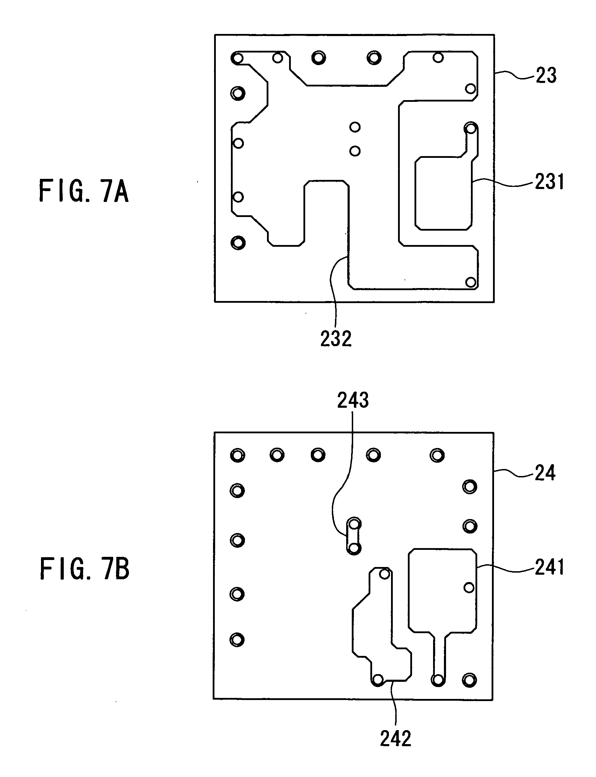

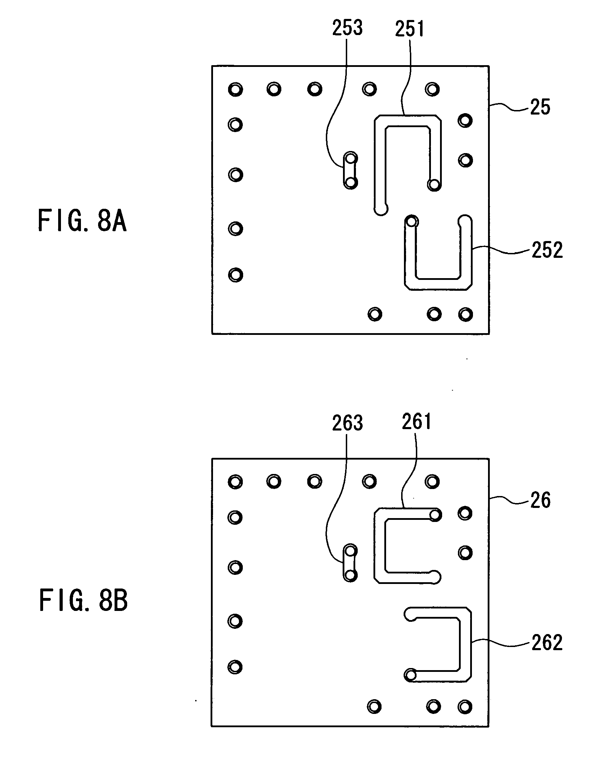

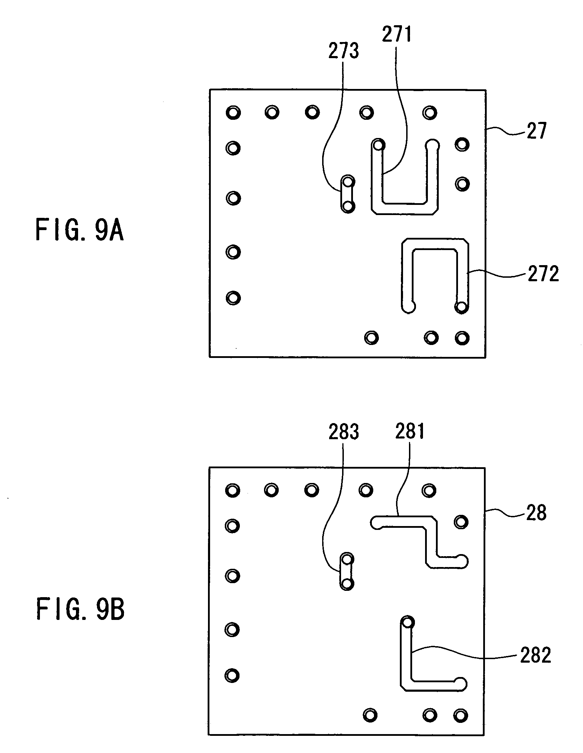

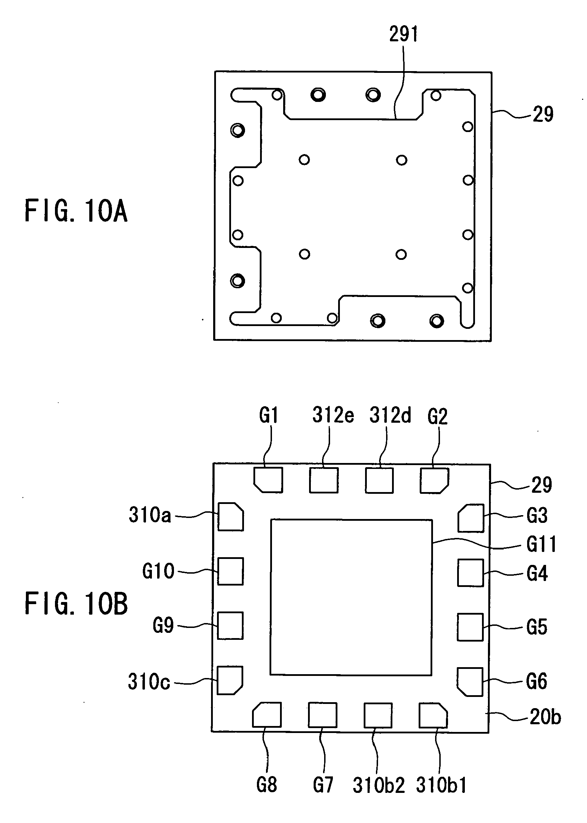

Reference is now made to FIG. 6A to FIG. 10B to describe the dielectric layers and the conductor layers of the layered substrate 20. FIG. 6A and FIG. 6B respectively show the top surfaces of the first and second dielectric layers from the top. FIG. 7A and FIG. 7B respectively show the top surfaces of the third and fourth dielectric layers from the top. FIG. 8A and FIG. 8B respectively show the top surfaces of the fifth and sixth dielectric layers from the top. FIG. 9A and FIG. 9B respectively show the top surfaces of the seventh and eighth dielectric layers from the top. FIG. 10A shows the top surface of the ninth dielectric layer from the top. FIG. 10B shows the ninth dielectric layer and a conductor layer therebelow as seen from above. In FIG. 6A to FIG. 10B, circles represent through holes.

On the top surface of the first dielectric layer 21 of FIG. 6A there are formed conductor layers 212A to 212G to which the switch 12 is connected, conductor layers 213A and 213B to which the capacitor C3 is connected, and conductor layers 214A and 214B to which the capacitor C4 is connected. The conductor layer 212A is connected to the port 12a of the switch 12. The conductor layer 212C is connected to the port 12b of the switch 12. The conductor layer 212E is connected to the port 12c of the switch 12. The conductor layer 212F is connected to the control terminal 12d of the switch 12. The conductor layer 212D is connected to the control terminal 12e of the switch 12. The conductor layers 212B and 212G are connected to the ground of the switch 12. The dielectric layer 21 has a plurality of through holes connected to the above-mentioned conductor layers.

Conductor layers 221, 222, 223, 224, 225 and 226 are formed on the top surface of the second dielectric layer 22 of FIG. 6B. The conductor layer 212A is connected to the conductor layer 221 via a through hole formed in the dielectric layer 21. The conductor layer 212D is connected to the conductor layer 222 via a through hole formed in the dielectric layer 21. The conductor layer 212F is connected to the conductor layer 223 via a through hole formed in the dielectric layer 21. The conductor layers 212C and 213A are connected to the conductor layer 224 via through holes formed in the dielectric layer 21. The conductor layer 214A is connected to the conductor layer 225 via a through hole formed in the dielectric layer 21. The conductor layers 212E and 214B are connected to the conductor layer 226 via through holes formed in the dielectric layer 21. The dielectric layer 22 has through holes connected to the conductor layers 221, 222, 223 and 225, and other through holes.

A capacitor-forming conductor layer 231 and a grounding conductor layer 232 are formed on the top surface of the third dielectric layer 23 of FIG. 7A. The conductor layer 213B is connected to the conductor layer 231 via through holes formed in the dielectric layers 21 and 22. The conductor layers 212B and 212G are connected to the conductor layer 232 via through holes formed in the dielectric layers 21 and 22. The dielectric layer 23 has through holes connected to the conductor layers 231 and 232, and other through holes.

Capacitor-forming conductor layers 241 and 242 and a conductor layer 243 are formed on the top surface of the fourth dielectric layer 24 of FIG. 7B. The conductor layers 231 and 241 and the dielectric layer 23 located therebetween constitute the capacitor C1 of FIG. 3. The conductor layers 232 and 242 and the dielectric layer 23 located therebetween constitute the capacitor C2 of FIG. 3. The conductor layer 232 is connected to the conductor layer 243 via two through holes formed in the dielectric layer 23. The dielectric layer 24 has through holes connected to the conductor layers 241, 242 and 243, and other through holes.

Inductor-forming conductor layers 251 and 252 and a conductor layer 253 are formed on the top surface of the fifth dielectric layer 25 of FIG. 8A. The conductor layer 242 is connected to the conductor layer 251 via through holes formed in the dielectric layer 24. The conductor layer 241 is connected to the conductor layer 252 via through holes formed in the dielectric layer 24. The conductor layer 243 is connected to the conductor layer 253 via two through holes formed in the dielectric layer 24. The dielectric layer 25 has through holes connected to the conductor layers 251, 252 and 253, and other through holes.

Inductor-forming conductor layers 261 and 262 and a conductor layer 263 are formed on the top surface of the sixth dielectric layer 26 of FIG. 8B. The conductor layer 251 is connected to the conductor layer 261 via a through hole formed in the dielectric layer 25. The conductor layer 252 is connected to the conductor layer 262 via a through hole formed in the dielectric layer 25. The conductor layer 253 is connected to the conductor layer 263 via two through holes formed in the dielectric layer 25. The dielectric layer 26 has through holes connected to the conductor layers 261, 262 and 263, and other through holes.

Inductor-forming conductor layers 271 and 272 and a conductor layer 273 are formed on the top surface of the seventh dielectric layer 27 of FIG. 9A. The conductor layer 261 is connected to the conductor layer 271 via a through hole formed in the dielectric layer 26. The conductor layer 262 is connected to the conductor layer 272 via a through hole formed in the dielectric layer 26. The conductor layer 263 is connected to the conductor layer 273 via two through holes formed in the dielectric layer 26. The dielectric layer 27 has through holes connected to the conductor layers 271, 272 and 273, and other through holes.

Inductor-forming conductor layers 281 and 282 and a conductor layer 283 are formed on the top surface of the eighth dielectric layer 28 of FIG. 9B. The conductor layer 271 is connected to the conductor layer 281 via a through hole formed in the dielectric layer 27. The conductor layer 231 is connected to the conductor layer 281 via through holes formed in the dielectric layers 23 to 27. The conductor layer 272 is connected to the conductor layer 282 via a through hole formed in the dielectric layer 27. The conductor layer 273 is connected to the conductor layer 283 via two through holes formed in the dielectric layer 27. The dielectric layer 28 has through holes connected to the conductor layers 282 and 283, and other through holes.

The inductor L1 of FIG. 3 is composed of the conductor layers 251, 261, 271 and 281 and the through holes connecting these conductor layers in series. The inductor L2 of FIG. 3 is composed of the conductor layers 252, 262, 272 and 282 and the through holes connecting these conductor layers in series.

A grounding conductor layer 291 is formed on the top surface of the ninth dielectric layer 29 of FIG. 10A. The conductor layers 282 and 283 are connected to the conductor layer 291 via through holes formed in the dielectric layer 28. The conductor layer 232 is connected to the conductor layer 291 via through holes formed in the dielectric layers 23 to 28. The dielectric layer 29 has through holes connected to the conductor layer 291, and other through holes.

As shown in FIG. 10B, on the lower surface of the dielectric layer 29, that is, on the bottom surface 20b of the layered substrate 20, there are formed conductor layers 310a, 310b1 and 310b2 that form the input terminals 10a, 10b1 and 10b2, a conductor layer 310c that forms the output terminal 10c, conductor layers 312d and 312e that form the control terminals 12d and 12e, and conductor layers G1 to G11 that form ground terminals.

The conductor layer 212A is connected to the conductor layer 310a via through holes formed in the dielectric layers 21 to 29 and the conductor layer 221. The conductor layer 241 is connected to the conductor layer 310b1 via through holes formed in the dielectric layers 24 to 29. The conductor layer 242 is connected to the conductor layer 310b2 via through holes formed in the dielectric layers 24 to 29. The conductor layer 214A is connected to the conductor layer 310c via through holes formed in the dielectric layers 21 to 29 and the conductor layer 225. The conductor layer 212F is connected to the conductor layer 312d via through holes formed in the dielectric layers 21 to 29 and the conductor layer 223. The conductor layer 212D is connected to the conductor layer 312e via through holes formed in the dielectric layers 21 to 29 and the conductor layer 222. The conductor layer 291 is connected to the conductor layers G1 to G11 via through holes formed in the dielectric layer 29. The conductor layers G1 to G11 are configured to be connected to the ground.

The first to ninth dielectric layers 21 to 29 and the conductor layers described above are stacked to form the layered substrate 20 of FIG. 4. The switch 12 and the capacitors C3 and C4 are mounted on the top surface 20a of the layered substrate 20. The balun 11 is formed using, among the above-described conductor layers, a plurality of ones provided within the layered substrate 20. In the present embodiment, a variety of types of substrates are employable as the layered substrate 20, such as one in which the dielectric layers are formed of a resin, ceramic, or a resin-ceramic composite material. However, a low-temperature co-fired ceramic multilayer substrate, which is excellent in high frequency response, is particularly preferable as the layered substrate 20.

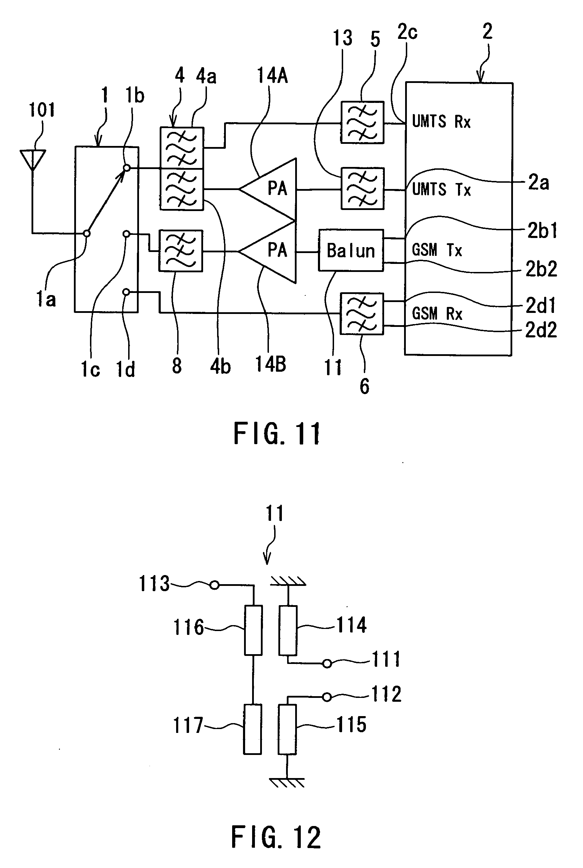

The advantages of the present embodiment will now be described with reference to a comparative example. FIG. 11 is a block diagram illustrating the circuit configuration of a high frequency circuit of the comparative example. The high frequency circuit of the comparative example does not have the switches 3 and 12 provided in the high frequency circuit shown in FIG. 1, but has two power amplifiers 14A and 14B instead of the power amplifier 14 provided in the high frequency circuit shown in FIG. 1. In the high frequency circuit of the comparative example, the transmission signal UMTS Tx outputted from the BPF 13 is amplified by the power amplifier 14A, and then enters the BPF 4b of the duplexer 4. The transmission signal GSM Tx outputted from the balun 11 is amplified by the power amplifier 14B, passes through the LPF 8, and enters at the port 1c of the switch 1. In the high frequency circuit of the comparative example, the balun 11, the BPF 13 and the power amplifiers 14A and 14B constitute the transmission circuit. The remainder of configuration of the high frequency circuit of the comparative example is the same as that of the high frequency circuit shown in FIG. 1.

The comparative example shown in FIG. 11 requires two power amplifiers, each of which is relatively expensive. This impedes reductions in size and cost of the transmission circuit and the high frequency circuit of a cellular phone including the transmission circuit. In contrast, according to the present embodiment, a single power amplifier 14 is used in common for both the transmission signal UMTS Tx and the transmission signal GSM Tx. Compared with the comparative example, the present embodiment thus allows a reduction in the number of power amplifiers to be included in the transmission circuit 7 by one, and thereby allows reductions in size and cost of the transmission circuit 7 and the high frequency circuit of a cellular phone including the transmission circuit 7. While reducing the number of power amplifiers by one, the present embodiment requires two additional switches 3 and 12. However, since a switch is less expensive than a power amplifier, the present embodiment allows a cost reduction compared with the comparative example.

By forming a single high frequency electronic component 10 including the balun 11 and the switch 12 as in the present embodiment, it is possible to reduce the area occupied by the balun 11 and the switch 12 in the transmission circuit 7, compared with the case of forming the balun 11 and the switch 12 as discrete elements and mounting them on a substrate. In this respect also, the present embodiment allows miniaturization of the transmission circuit 7 and the high frequency circuit of a cellular phone including the transmission circuit 7.

The high frequency electronic component 10 of the present embodiment includes the layered substrate 20, the balun 11 is formed using a plurality of conductor layers provided within the layered substrate 20, and the switch 12 is mounted on the layered substrate 20. The balun 11 is easily formable using a plurality of conductor layers provided within the layered substrate 20 as shown in FIG. 6A to FIG. 10B. By forming the balun 11 using a plurality of conductor layers provided within the layered substrate 20 and mounting the switch 12 on the layered substrate 20 as in the present embodiment, it is possible to reduce the area occupied by the high frequency electronic component 10 in the transmission circuit 7, in particular. The present embodiment thus allows further miniaturization of the transmission circuit 7 and the high frequency circuit of a cellular phone including the transmission circuit 7.

Detailed descriptions will now be made concerning the structure of the switch 12 of the high frequency electronic component 10 of the present embodiment and concerning whether a capacitor is needed in the signal paths connected to the switch 12. First, as the switch 12 it is possible to use a switch formed of an MMIC, or a switch formed using a PIN diode. Examples of the switch formed of an MMIC include one that uses a depletion mode field-effect transistor (FET) and one that uses an enhancement mode FET. In the depletion mode FET, a drain current flows even when the gate voltage is zero. In the enhancement mode FET, no drain current flows when the gate voltage is zero. Examples of the depletion mode FET include a GaAs-base pseudomorphic high electron mobility transistor (pHEMT). Examples of the enhancement mode FET include a complementary metal oxide semiconductor (CMOS).

In the case where a switch formed of an MMIC using a depletion mode FET or a switch formed using a PIN diode is used as the switch 12, it is in principle necessary to provide a capacitor for blocking the passage of direct currents in the signal paths connected to the respective ports of the switch 12. However, if any element connected to any of those signal paths has the function of blocking the passage of direct currents and has a high resistance to direct currents, it is not necessary to provide a capacitor for blocking the passage of direct currents in the signal path.

In the case where a switch formed of an MMIC using an enhancement mode FET is used as the switch 12, it is not necessary to provide a capacitor for blocking the passage of direct currents in any of the signal paths connected to the respective ports of the switch 12.

Reference is now made to FIG. 12 to describe another possible configuration of the balun 11. The balun 11 shown in FIG. 12 is formed using resonators. This balun 11 has two balanced inputs 111 and 112, an unbalanced output 113, and four quarter-wave resonators 114, 115, 116 and 117. One end of the quarter-wave resonator 114 is connected to the balanced input 111, and the other end of the quarter-wave resonator 114 is connected to the ground. One end of the quarter-wave resonator 115 is connected to the balanced input 112, and the other end of the quarter-wave resonator 115 is connected to the ground. One end of the quarter-wave resonator 116 is connected to the unbalanced output 113, and the other end of the quarter-wave resonator 116 is connected to one end of the quarter-wave resonator 117. The quarter-wave resonator 116 is coupled to the quarter-wave resonator 114, and the quarter-wave resonator 117 is coupled to the quarter-wave resonator 115.

The balun 11 formed of the LC circuit shown in FIG. 3 is small in insertion loss, but narrow in frequency band in which a good amplitude balance characteristic is obtained. On the other hand, the balun 11 formed using the resonators shown in FIG. 12 is slightly greater in insertion loss, but broad in frequency band in which a good amplitude balance characteristic is obtained. The balun 11 formed using the resonators shown in FIG. 12 blocks the passage of direct currents between the unbalanced output 113 and each of the balanced inputs 111 and 112. Therefore, if the balun 11 of FIG. 12 is used, it is unnecessary to provide a capacitor for blocking the passage of direct currents in the signal paths between the switch 12 and the balun 11 even in the case where the switch 12 is of the type which in principle requires a capacitor for blocking the passage of direct currents in the signal paths connected to the ports of the switch 12.

The balun 11 of FIG. 12 can be formed using a plurality of conductor layers provided within the layered substrate 20, like the balun 11 of FIG. 3.

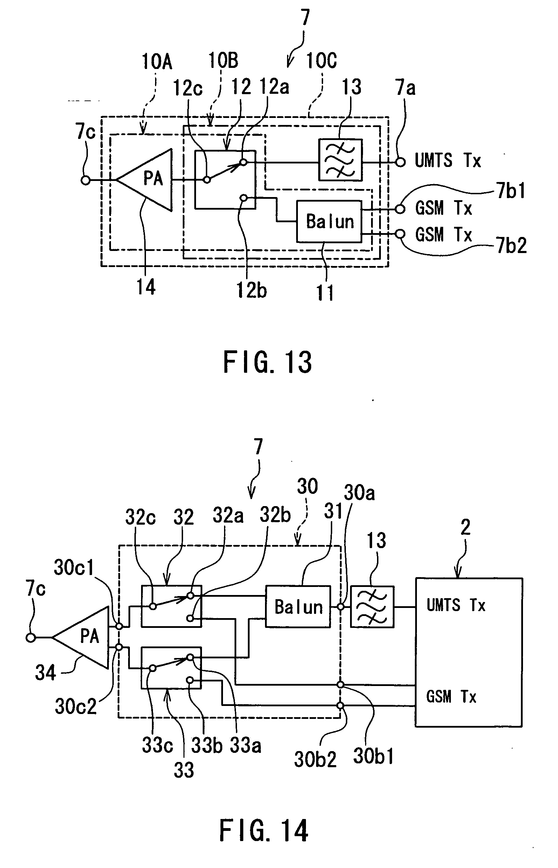

Reference is now made to FIG. 13 to describe first to third modification examples of the high frequency electronic component of the present embodiment. FIG. 13 shows a portion of the transmission circuit 7 included in the high frequency electronic component of each modification example. The high frequency electronic component 10A of the first modification example includes the power amplifier 14 in addition to the balun 11 and the switch 12. In this high frequency electronic component 10A, the power amplifier 14 may be mounted on the top surface 20a of the layered substrate 20. The input of the power amplifier 14 is connected to the output port 12c of the switch 12, and the output of the power amplifier 14 is connected to the output of the high frequency electronic component 10A. The power amplifier 14 is thus provided between the output port 12c and the output of the high frequency electronic component 10A.

The high frequency electronic component 10B of the second modification example includes the BPF 13 in addition to the balun 11 and the switch 12. In this high frequency electronic component 10B, the BPF 13 may be mounted on the top surface 20a of the layered substrate 20. The input of the BPF 13 is connected to an input terminal of the high frequency electronic component 10B at which the transmission signal UMTS Tx is received. The output of the BPF 13 is connected to the input port 12a of the switch 12. The BPF 13 is thus provided between the input port 12a and the input terminal of the high frequency electronic component 10B at which the transmission signal UMTS Tx is received.

The high frequency electronic component 10C of the third modification example includes the power amplifier 14 and the BPF 13 in addition to the balun 11 and the switch 12. In this high frequency electronic component 10C, the power amplifier 14 and the BPF 13 may be mounted on the top surface 20a of the layered substrate 20. The input of the power amplifier 14 is connected to the output port 12c of the switch 12, and the output of the power amplifier 14 is connected to the output of the high frequency electronic component 10C. The input of the BPF 13 is connected to an input terminal of the high frequency electronic component 10C at which the transmission signal UMTS Tx is received, and the output of the BPF 13 is connected to the input port 12a of the switch 12.

### [Second Embodiment]

A high frequency electronic component of a second embodiment of the invention will now be described with reference to FIG. 14. FIG. 14 shows a transmission circuit 7 including the high frequency electronic component 30 of the second embodiment. The transmission circuit 7 of the second embodiment includes, instead of the power amplifier 14 of the first embodiment, a balanced-input power amplifier 34 having two balanced inputs and an unbalanced output. The transmission circuit 7 of the second embodiment includes the high frequency electronic component 30 instead of the high frequency electronic component 10 of the first embodiment.

The high frequency electronic component 30 has input terminals 30a, 30b1 and 30b2, output terminals 30c1 and 30c2, a balun 31, and two switches 32 and 33. The balun 31 has an unbalanced input and two balanced outputs. The circuit configuration of the balun 31 is the same as that of the balun 11 of the first embodiment except that the two balanced inputs of the balun 11 of the first embodiment are replaced with the two balanced outputs, and the unbalanced output of the balun 11 of the first embodiment is replaced with the unbalanced input. The switch 32 has two input ports 32a and 32b and an output 32c, and connects the output port 32c selectively to one of the input ports 32a and 32b. The switch 33 has two input ports 33a and 33b and an output 33c, and connects the output port 33c selectively to one of the input ports 33a and 33b.

The input terminal 30a is connected to the output of the BPF 13 and the unbalanced input of the balun 31. One of the balanced outputs of the balun 31 is connected to the input port 32a of the switch 32. The other of the balanced outputs of the balun 31 is connected to the input port 33a of the switch 33. The input terminals 30b1 and 30b2 receive the transmission signal GSM Tx in the form of a balanced signal outputted from the IC 2. The input terminal 30b1 is connected to the input port 32b of the switch 32. The input terminal 30b2 is connected to the input port 33b of the switch 33.

The output port 32c of the switch 32 is connected to the output terminal 30c1. The output port 33c of the switch 33 is connected to the output terminal 30c2. The output terminals 30c1 and 30c2 are connected to the two balanced inputs of the power amplifier 34. The unbalanced output of the power amplifier 34 is connected to the output 7c of the transmission circuit 7.

The remainder of configuration of the transmission circuit 7 of the second embodiment is the same as that of the first embodiment. The high frequency electronic component 30 of the second embodiment corresponds to the second high frequency electronic component of the present invention. In the second embodiment, the transmission signal UMTS Tx in the form of an unbalanced signal corresponds to the first transmission signal in the second high frequency electronic component of the present invention, and the transmission signal GSM Tx in the form of a balanced signal corresponds to the second transmission signal in the second high frequency electronic component of the present invention. The input terminal 30a corresponds to the first input terminal of the second high frequency electronic component of the present invention, and the input terminals 30b1 and 30b2 correspond to the second input terminal of the second high frequency electronic component of the present invention.

The switches 32 and 33 correspond to the switch of the second high frequency electronic component of the present invention. The input ports 32a and 33a correspond to the first input port in the second high frequency electronic component of the present invention. The input ports 32b and 33b correspond to the second input port in the second high frequency electronic component of the present invention.

In the transmission circuit 7 including the high frequency electronic component 30, the transmission signal UMTS Tx in the form of an unbalanced signal outputted from the IC 2 passes through the BPF 13 and is received at the input terminal 30a of the high frequency electronic component 30. The balun 31 converts the transmission signal UMTS Tx in the form of an unbalanced signal received at the input terminal 30a to a transmission signal UMTS Tx in the form of a balanced signal and outputs this signal. The transmission signal GSM Tx in the form of a balanced signal outputted from the IC 2 is received at the input terminals 30b1 and 30b2 of the high frequency electronic component 30. The input ports 32a and 33a of the switches 32 and 33 receive the transmission signal UMTS Tx in the form of a balanced signal outputted from the balun 31. The input ports 32b and 33b of the switches 32 and 33 receive the transmission signal GSM Tx in the form of a balanced signal received at the input terminals 30b1 and 30b2. The switches 32 and 33 perform switching between the transmission signal UMTS Tx in the form of a balanced signal received at the input ports 32a and 33a and the transmission signal GSM Tx in the form of a balanced signal received at the input ports 32b and 33b, and output one of the transmission signals to the power amplifier 34. The transmission signal in the form of a balanced signal received at the power amplifier 34 is amplified by the power amplifier 34, and is outputted as a transmission signal in the form of an unbalanced signal. The transmission signal outputted from the power amplifier 34 enters at the port 3a of the switch 3 of FIG. 1.

Like the high frequency electronic component 10 of the first embodiment, the high frequency electronic component 30 of the second embodiment can be constructed by forming the balun 31 using a plurality of conductor layers provided within the layered substrate 20 and by mounting the switches 32 and 33 on the layered substrate 20.

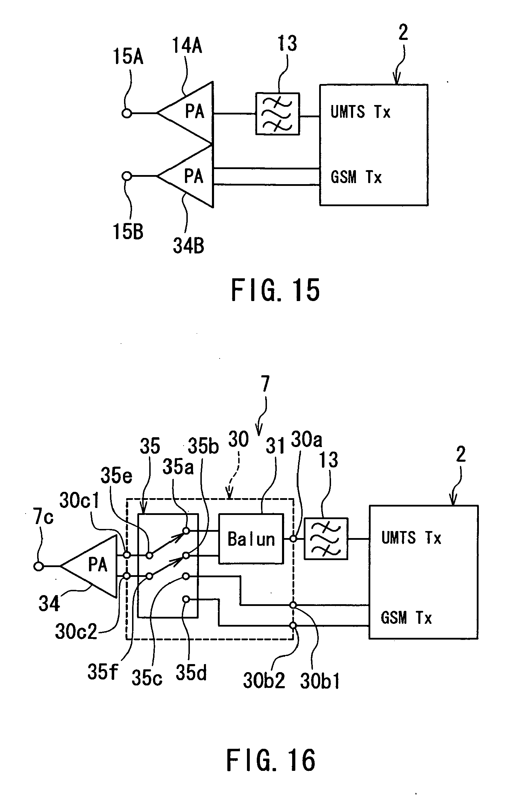

The advantages of the second embodiment will now be described with reference to a comparative example. FIG. 15 is a block diagram illustrating the circuit configuration of a transmission circuit of the comparative example. The transmission circuit of the comparative example has two power amplifiers 14A and 34B and two outputs 15A and 15B, instead of the balun 31, the switches 32 and 33, the power amplifier 34 and the output 7c of the transmission circuit shown in FIG. 14. In the transmission circuit of the comparative example, the transmission signal UMTS Tx in the form of an unbalanced signal outputted from the BPF 13 is amplified by the power amplifier 14A, and is outputted from the output 15A. The transmission signal GSM Tx in the form of a balanced signal outputted from the IC 2 is amplified by the power amplifier 34B, and is outputted from the output 15B as a transmission signal GSM Tx in the form of an unbalanced signal. The transmission signal UMTS Tx outputted from the output 15A enters the BPF 4b of the duplexer 4 of FIG. 11. The transmission signal GSM Tx outputted from the output 15B is received at the port 1c of the switch 1 of FIG. 11.

The comparative example shown in FIG. 15 requires two power amplifiers, each of which is relatively expensive. This impedes reductions in size and cost of the transmission circuit and the high frequency circuit of a cellular phone including the transmission circuit. In contrast, according to the second embodiment, a single power amplifier 34 is used in common for both the transmission signal UMTS Tx and the transmission signal GSM Tx. Compared with the comparative example, the second embodiment thus allows a reduction in the number of power amplifiers to be included in the transmission circuit 7 by one, and thereby allows reductions in size and cost of the transmission circuit 7 and the high frequency circuit of a cellular phone including the transmission circuit 7. While reducing the number of power amplifiers by one, the second embodiment requires three additional switches 3, 32 and 33. However, since a switch is less expensive than a power amplifier, the second embodiment allows a cost reduction compared with the comparative example.

The high frequency electronic component of the second embodiment may include at least one of the power amplifier 34 and the BPF 13 in addition to the balun 31 and the switches 32 and 33, like the first to third modification examples of the first embodiment. The remainder of configuration, functions and advantages of the second embodiment are similar to those of the first embodiment.

### [Third Embodiment]

A high frequency electronic component of a third embodiment of the invention will now be described with reference to FIG. 16. FIG. 16 shows a transmission circuit 7 including the high frequency electronic component 30 of the third embodiment. The high frequency electronic component 30 of the third embodiment includes a switch 35 for switching balanced signals, instead of the switches 32 and 33 of the second embodiment. The switch 35 has four input ports 35a, 35b, 35c and 35d and two output ports 35e and 35f, and is capable of switching between a state in which the output port 35e is connected to the input port 35a while the output port 35f is connected to the input port 35b and a state in which the output port 35e is connected to the input port 35c while the output port 35f is connected to the input port 35d.

The two balanced outputs of the balun 31 are connected to the input ports 35a and 35b of the switch 35. The input terminals 30b1 and 30b2 are connected to the input ports 35c and 35d of the switch 35. The output ports 35e and 35f of the switch 35 are connected to the output terminals 30c1 and 30c2.

In the third embodiment, the switch 35 corresponds to the switch of the second high frequency electronic component of the present invention. The input ports 35a and 35b correspond to the first input port in the second high frequency electronic component of the present invention. The input ports 35c and 35d correspond to the second input port in the second high frequency electronic component of the present invention.

In the third embodiment, the input ports 35a and 35b of the switch 35 receive the transmission signal UMTS Tx in the form of a balanced signal outputted from the balun 31. The input ports 35c and 35d of the switch 35 receive the transmission signal GSM Tx received at the input terminals 30b1 and 30b2. The switch 35 performs switching between the transmission signal UMTS Tx in the form of a balanced signal received at the input ports 35a and 35b and the transmission signal GSM Tx in the form of a balanced signal received at the input ports 35c and 35d, and outputs one of the transmission signals to the power amplifier 34.

Like the high frequency electronic component 10 of the first embodiment, the high frequency electronic component 30 of the third embodiment can be constructed by forming the balun 31 using a plurality of conductor layers provided within the layered substrate 20 and by mounting the switch 35 on the layered substrate 20.

The high frequency electronic component of the third embodiment may include at least one of the power amplifier 34 and the BPF 13 in addition to the balun 31 and the switch 35, like the first to third modification examples of the first embodiment. The remainder of configuration, functions and advantages of the third embodiment are similar to those of the second embodiment.

### [Fourth Embodiment]

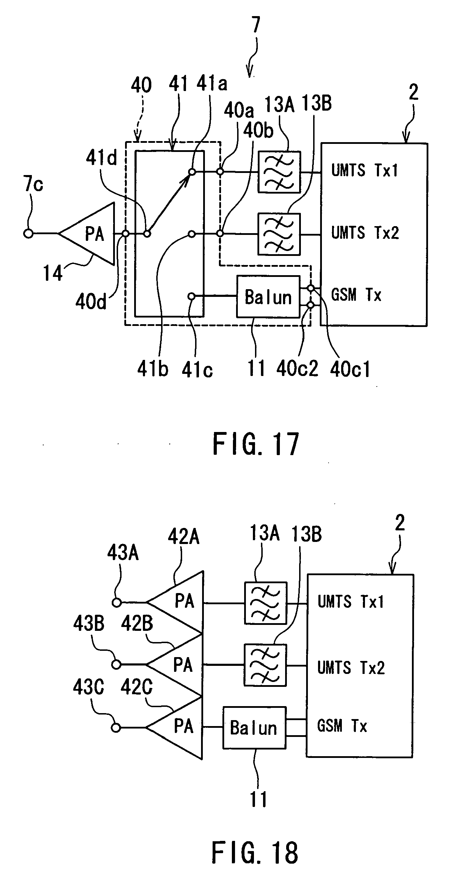

A high frequency electronic component of a fourth embodiment of the invention will now be described with reference to FIG. 17. FIG. 17 shows a transmission circuit 7 including the high frequency electronic component 40 of the fourth embodiment. The high frequency electronic component 40 of the fourth embodiment is for use in the transmission circuit 7 that processes two UMTS transmission signals UMTS Tx1 and UMTS Tx2 and a GSM transmission signal GSM Tx. In the fourth embodiment, in the case where the transmission signal GSM Tx is a transmission signal of at least one of GSM850 (AGSM) and GSM900 (EGSM), the transmission signals UMTS Tx1 and UMTS Tx2 are transmission signals of two different bands among the bands V, VI and VIII whose frequency bands are close to those of GSM850 (AGSM) and GSM900 (ESGM). In the case where the transmission signal GSM Tx is a transmission signal of at least one of GSM1800 (DCS) and GSM1900 (PCS), the transmission signals UMTS Tx1 and UMTS Tx2 are transmission signals of two different bands among the bands I, II, III, IV, IX and X whose frequency bands are close to those of GSM1800 (DCS) and GSM1900 (PCS). In the high frequency circuit including the transmission circuit 7 of the fourth embodiment, the IC 2 generates and outputs transmission signals UMTS Tx1 and UMTS Tx2 each in the form of an unbalanced signal and a GSM transmission signal GSM Tx in the form of a balanced signal.

The transmission circuit 7 of the fourth embodiment includes two BPFs 13A and 13B instead of the BPF 13 of the first embodiment, and includes the high frequency electronic component 40 instead of the high frequency electronic component 10 of the first embodiment. The transmission signals UMTS Tx1 and UMTS Tx2 outputted from the IC 2 enter the BPFs 13A and 13B, respectively.

The high frequency electronic component 40 has input terminals 40a, 40b, 40c1 and 40c2, an output terminal 40d, the balun 11 and a switch 41. The switch 41 has three input ports 41a, 41b and 41c and an output port 41d, and connects the output port 41d selectively to one of the input ports 41a, 41b and 41c.

The input terminal 40a is connected to the output of the BPF 13A and the input port 41a of the switch 41. The input terminal 40b is connected to the output of the BPF 13B and the input port 41b of the switch 41. The input terminals 40c1 and 40c2 receive the transmission signal GSM Tx in the form of a balanced signal outputted from the IC 2. The two balanced inputs of the balun 11 are connected to the input terminals 40c1 and 40c2. The unbalanced output of the balun 11 is connected to the input port 41c of the switch 41. The output port 41d of the switch 41 is connected to the output terminal 40d. The output terminal 40d is connected to the input of the power amplifier 14.

The high frequency electronic component 40 of the fourth embodiment corresponds to the first high frequency electronic component of the present invention. In the fourth embodiment, the transmission signals UMTS Tx1 and UMTS Tx2 in the form of an unbalanced signal correspond to the first transmission signal in the first high frequency electronic component of the present invention, and the transmission signal GSM Tx in the form of a balanced signal corresponds to the second transmission signal in the first high frequency electronic component of the present invention. The input terminals 40a and 40b correspond to the first input terminal of the first high frequency electronic component of the present invention, and the input terminals 40c1 and 40c2 correspond to the second input terminal of the first high frequency electronic component of the present invention.

The input ports 41a and 41b of the switch 41 correspond to the first input port in the first high frequency electronic component of the present invention. The input port 41c of the switch 41 corresponds to the second input port in the first high frequency electronic component of the present invention.

In the transmission circuit 7 including the high frequency electronic component 40, the transmission signal UMTS Tx1 in the form of an unbalanced signal outputted from the IC 2 passes through the BPF 13A and the input terminal 40a, and is received at the input port 41a of the switch 41. The transmission signal UMTS Tx2 in the form of an unbalanced signal outputted from the IC 2 passes through the BPF 13B and the input terminal 40b, and is received at the input port 41b of the switch 41. The transmission signal GSM Tx in the form of a balanced signal outputted from the IC 2 passes through the input terminals 40c1 and 40c2, and is converted by the balun 11 to a transmission signal GSM Tx in the form of an unbalanced signal. This transmission signal GSM Tx in the form of an unbalanced signal is received at the input port 41c of the switch 41. The switch 41 performs switching among the transmission signal UMTS Tx1 in the form of an unbalanced signal received at the input port 41a, the transmission signal UMTS Tx2 in the form of an unbalanced signal received at the input port 41b and the transmission signal GSM Tx in the form of an unbalanced signal received at the input port 41c, and outputs one of the transmission signals to the power amplifier 14. The transmission signal received at the power amplifier 14 is amplified by the power amplifier 14, and is outputted to the output 7c of the transmission circuit 7. In the fourth embodiment, the output 7c is connected to an input port of a switch (not shown) having the input port and three output ports. This switch selectively connects one of the three output ports to the input port, and outputs the transmission signals UMTS Tx1, UMTS Tx2 and GSM Tx received at the input port from different ones of the output ports.

Like the high frequency electronic component 10 of the first embodiment, the high frequency electronic component 40 of the fourth embodiment can be constructed by forming the balun 11 using a plurality of conductor layers provided within the layered substrate 20 and by mounting the switch 41 on the layered substrate 20.

The advantages of the fourth embodiment will now be described with reference to a comparative example. FIG. 18 is a block diagram illustrating the circuit configuration of a transmission circuit of the comparative example. The transmission circuit of the comparative example has three power amplifiers 42A, 42B and 42C and three outputs 43A, 43B and 43C, instead of the switch 41, the power amplifier 14 and the output 7c of the transmission circuit shown in FIG. 17. In the transmission circuit of the comparative example, the transmission signal UMTS Tx1 in the form of an unbalanced signal outputted from the BPF 13A is amplified by the power amplifier 42A, and is outputted from the output 43A. The transmission signal UMTS Tx2 in the form of an unbalanced signal outputted from the BPF 13B is amplified by the power amplifier 42B, and is outputted from the output 43B. The transmission signal GSM Tx in the form of an unbalanced signal outputted from the balun 11 is amplified by the power amplifier 42C, and is outputted from the output 43C.

The comparative example shown in FIG. 18 requires three power amplifiers, each of which is relatively expensive. This impedes reductions in size and cost of the transmission circuit and the high frequency circuit of a cellular phone including the transmission circuit. In contrast, according to the fourth embodiment, a single power amplifier 14 is used in common for the three transmission signals UMTS Tx1, UMTS Tx2 and GSM Tx. Compared with the comparative example, the fourth embodiment thus allows a reduction in the number of power amplifiers to be included in the transmission circuit 7 by two, and thereby allows reductions in size and cost of the transmission circuit 7 and the high frequency circuit of a cellular phone including the transmission circuit 7.

Like the first to third modification examples of the first embodiment, the high frequency electronic component of the fourth embodiment may include the power amplifier 14, or the BPFs 13A and 13B, or both the power amplifier 14 and the BPFs 13A and 13B, in addition to the balun 11 and the switch 41. The remainder of configuration, functions and advantages of the fourth embodiment are similar to those of the first embodiment.

### [Fifth Embodiment]

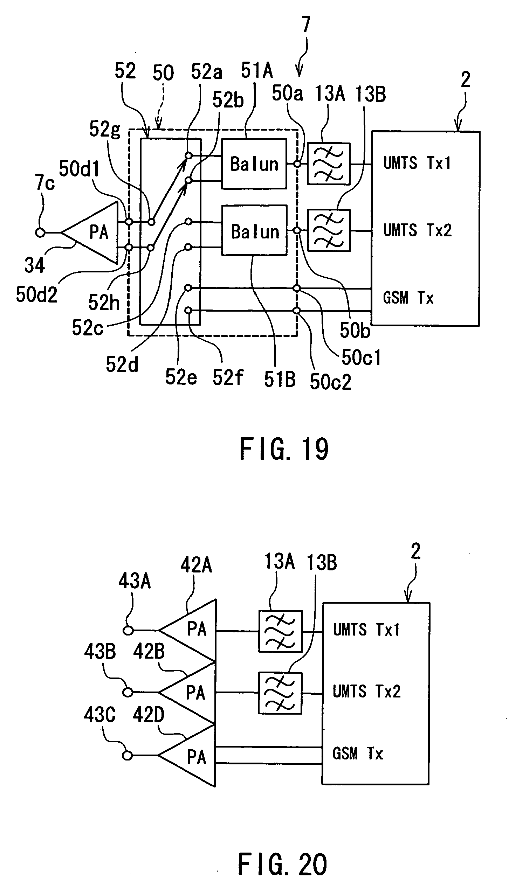

A high frequency electronic component of a fifth embodiment of the invention will now be described with reference to FIG. 19. FIG. 19 shows a transmission circuit 7 including the high frequency electronic component 50 of the fifth embodiment. The transmission circuit 7 of the fifth embodiment includes a balanced-input power amplifier 34 having two balanced inputs and an unbalanced output, instead of the power amplifier 14 of the fourth embodiment. The transmission circuit 7 of the fifth embodiment includes the high frequency electronic component 50 instead of the high frequency electronic component 40 of the fourth embodiment.

The high frequency electronic component 50 has input terminals 50a, 50b, 50c1 and 50c2, output terminals 50d1 and 50d2, baluns 51A and 51B, and a switch 52. Each of the baluns 51A and 51B has an unbalanced input and two balanced outputs. The circuit configuration of each of the baluns 51A and 51B is the same as that of the balun 31 of the second embodiment.

The switch 52 has six input ports 52a, 52b, 52c, 52d, 52e and 52f, and two output ports 52g and 52h. The switch 52 is capable of switching among a state in which the output port 52g is connected to the input port 52a while the output port 52h is connected to the input port 52b, a state in which the output port 52g is connected to the input port 52c while the output port 52h is connected to the input port 52d, and a state in which the output port 52g is connected to the input port 52e while the output port 52h is connected to the input port 52f.

The input terminal 50a is connected to the output of the BPF 13A and the unbalanced input of the balun 51A. The input terminal 50b is connected to the output of the BPF 13B and the unbalanced input of the balun 51B. The two balanced outputs of the balun 51A are connected to the input ports 52a and 52b of the switch 52. The two balanced outputs of the balun 51B are connected to the input ports 52c and 52d of the switch 52. The input terminals 50c1 and 50c2 are connected to the input ports 52e and 52f of the switch 52. The output ports 52g and 52h of the switch 52 are connected to the output terminals 50d1 and 50d2.

In the fifth embodiment, the input ports 52a, 52b, 52c and 52d of the switch 52 correspond to the first input port in the second high frequency electronic component of the present invention. The input ports 52e and 52f correspond to the second input port in the second high frequency electronic component of the present invention.

In the transmission circuit 7 including the high frequency electronic component 50, the transmission signal UMTS Tx1 in the form of an unbalanced signal outputted from the IC 2 passes through the BPF 13A, and is received at the input terminal 50a of the high frequency electronic component 50. The transmission signal UMTS Tx2 in the form of an unbalanced signal outputted from the IC 2 passes through the BPF 13B, and is received at the input terminal 50b of the high frequency electronic component 50. The balun 51A converts the transmission signal UMTS Tx1 in the form of an unbalanced signal received at the input terminal 50a to a transmission signal UMTS Tx1 in the form of a balanced signal, and outputs this signal. The balun 51B converts the transmission signal UMTS Tx2 in the form of an unbalanced signal received at the input terminal 50b to a transmission signal UMTS Tx2 in the form of a balanced signal, and outputs this signal. The transmission signal GSM Tx in the form of a balanced signal outputted from the IC 2 is received at the input terminals 50c1 and 50c2 of the high frequency electronic component 50.

The input ports 52a and 52b of the switch 52 receive the transmission signal UMTS Tx1 in the form of a balanced signal outputted from the balun 51A. The input ports 52c and 52d of the switch 52 receive the transmission signal UMTS Tx2 in the form of a balanced signal outputted from the balun 51B. The input ports 52e and 52f of the switch 52 receive the transmission signal GSM Tx in the form of a balanced signal received at the input terminals 50c1 and 50c2. The switch 52 performs switching among the transmission signal UMTS Tx1 in the form of a balanced signal received at the input ports 52a and 52b, the transmission signal UMTS Tx2 in the form of a balanced signal received at the input ports 52c and 52d, and the transmission signal GSM Tx in the form of a balanced signal received at the input ports 52e and 52f, and outputs one of the transmission signals from the output ports 52g and 52h to the power amplifier 34.

Like the high frequency electronic component 10 of the first embodiment, the high frequency electronic component 50 of the fifth embodiment can be constructed by forming the baluns 51A and 51B using a plurality of conductor layers provided within the layered substrate 20 and by mounting the switch 52 on the layered substrate 20.

The advantages of the fifth embodiment will now be described with reference to a comparative example. FIG. 20 is a block diagram illustrating the circuit configuration of a transmission circuit of the comparative example. The transmission circuit of the comparative example has three power amplifiers 42A, 42B and 42D and three outputs 43A, 43B and 43C, instead of the baluns 51A and 51B, the switch 52, the power amplifier 34 and the output 7c of the transmission circuit shown in FIG. 19. In the transmission circuit of the comparative example, the transmission signal UMTS Tx1 in the form of an unbalanced signal outputted from the BPF 13A is amplified by the power amplifier 42A, and is outputted from the output 43A. The transmission signal UMTS Tx2 in the form of an unbalanced signal outputted from the BPF 13B is amplified by the power amplifier 42B, and is outputted from the output 43B. The transmission signal GSM Tx in the form of a balanced signal outputted from the IC 2 is amplified by the power amplifier 42D, and is outputted from the output 43C as a transmission signal GSM Tx in the form of an unbalanced signal.

The comparative example shown in FIG. 20 requires three power amplifiers, each of which is relatively expensive. This impedes reductions in size and cost of the transmission circuit and the high frequency circuit of a cellular phone including the transmission circuit. In contrast, according to the fifth embodiment, a single power amplifier 34 is used in common for the three transmission signals UMTS Tx1, UMTS Tx2 and GSM Tx. Compared with the comparative example, the fifth embodiment thus allows a reduction in the number of power amplifiers to be included in the transmission circuit 7 by two, and thereby allows reductions in size and cost of the transmission circuit 7 and the high frequency circuit of a cellular phone including the transmission circuit 7.

In the fifth embodiment, the switch 52 may be replaced with two switches each of which selectively connects one of three input ports to a single output port.

Like the first to third modification examples of the first embodiment, the high frequency electronic component 50 of the fifth embodiment may include the power amplifier 34, or the BPFs 13A and 13B, or both the power amplifier 34 and the BPFs 13A and 13B, in addition to the baluns 51A and 51B and the switch 52. The remainder of configuration, functions and advantages of the fifth embodiment are similar to those of the fourth embodiment.

### [Sixth Embodiment]

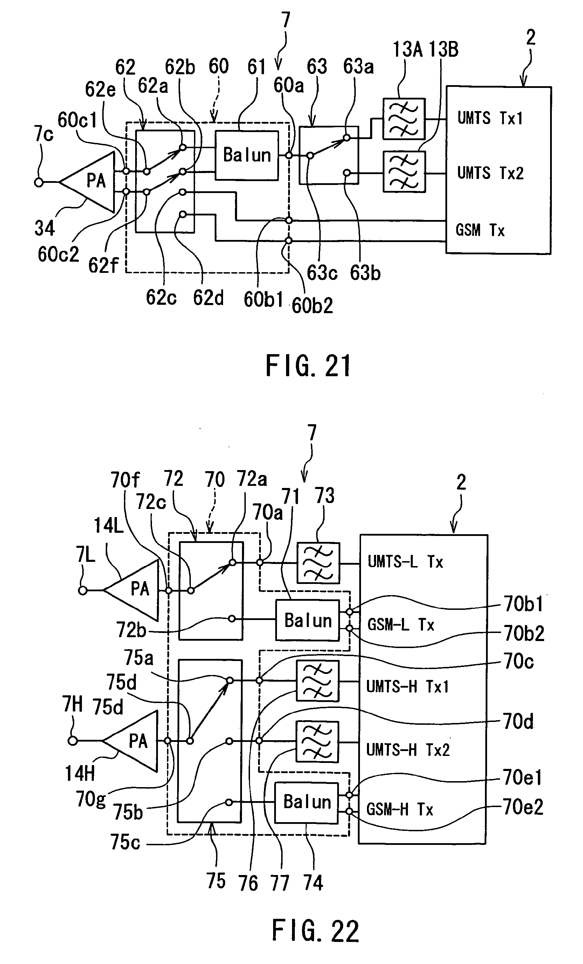

A high frequency electronic component of a sixth embodiment of the invention will now be described with reference to FIG. 21. FIG. 21 shows a transmission circuit 7 including the high frequency electronic component 60 of the sixth embodiment. The transmission circuit 7 of the sixth embodiment includes a switch 63 and the high frequency electronic component 60, instead of the high frequency electronic component 50 of the fifth embodiment. The switch 63 has an input port 63a connected to the output of the BPF 13A, an input port 63b connected to the output of the BPF 13B, and an output port 63c. The switch 63 connects the output port 63c selectively to one of the input ports 63a and 63b.

The high frequency electronic component 60 has input terminals 60a, 60b1 and 60b2, output terminals 60c1 and 60c2, a balun 61, and a switch 62. The input terminal 60a is connected to the output port 63c of the switch 63. The balun 61 has an unbalanced input and two balanced outputs. The circuit configuration of the balun 61 is the same as that of the balun 31 of the second embodiment. The unbalanced input of the balun 61 is connected to the input terminal 60a.

The switch 62 has four input ports 62a, 62b, 62c and 62d, and two output ports 62e and 62f. The switch 62 is capable of switching between a state in which the output port 62e is connected to the input port 62a while the output port 62f is connected to the input port 62b and a state in which the output port 62e is connected to the input port 62c while the output port 62f is connected to the input port 62d.

The two balanced outputs of the balun 61 are connected to the input ports 62a and 62b of the switch 62. The input terminals 60b1 and 60b2 are connected to the input ports 62c and 62d of the switch 62. The output ports 62e and 62f of the switch 62 are connected to the output terminals 60c1 and 60c2.

In the sixth embodiment, the input ports 62a and 62b of the switch 62 correspond to the first input port in the second high frequency electronic component of the present invention. The input ports 62c and 62d correspond to the second input port in the second high frequency electronic component of the present invention.

In the transmission circuit 7 including the high frequency electronic component 60, the transmission signal UMTS Tx1 in the form of an unbalanced signal outputted from the IC 2 passes through the BPF 13A, and is received at the input port 63a of the switch 63. The transmission signal UMTS Tx2 in the form of an unbalanced signal outputted from the IC 2 passes through the BPF 13B, and is received at the input port 63b of the switch 63. The switch 63 performs switching between the transmission signal UMTS Tx1 received at the input port 63a and the transmission signal UMTS Tx2 received at the input port 63b, and outputs one of the transmission signals from the output port 63c to the input terminal 60a of the high frequency electronic component 60.

The balun 61 of the high frequency electronic component 60 converts the transmission signal UMTS Tx1 or UMTS Tx2 in the form of an unbalanced signal received at the input terminal 60a to a transmission signal UMTS Tx1 or UMTS Tx2 in the form of a balanced signal and outputs this signal. The transmission signal GSM Tx in the form of a balanced signal outputted from the IC 2 is received at the input terminals 60b1 and 60b2 of the high frequency electronic component 60.

The input ports 62a and 62b of the switch 62 receive the transmission signal UMTS Tx1 or UMTS Tx2 in the form of a balanced signal outputted from the balun 61. The input ports 62c and 62d of the switch 62 receive the transmission signal GSM Tx in the form of a balanced signal received at the input terminals 60b1 and 60b2. The switch 62 performs switching between the transmission signal UMTS Tx1 or UMTS Tx2 in the form of a balanced signal received at the input ports 62a and 62b and the transmission signal GSM Tx in the form of a balanced signal received at the input ports 62c and 62d, and outputs one of the transmission signals from the output ports 62e and 62f to the power amplifier 34.

Like the high frequency electronic component 10 of the first embodiment, the high frequency electronic component 60 of the sixth embodiment can be constructed by forming the balun 61 using a plurality of conductor layers provided within the layered substrate 20 and by mounting the switch 62 on the layered substrate 20.

In the sixth embodiment, the switch 62 may be replaced with two switches each of which selectively connects one of two input ports to a single output port.

The high frequency electronic component 60 of the sixth embodiment may include at least one of the power amplifier 34 and the switch 63 in addition to the balun 61 and the switch 62. In the case where the high frequency electronic component 60 includes the switch 63, the high frequency electronic component 60 may further include the BPFs 13A and 13B. The remainder of configuration, functions and advantages of the sixth embodiment are similar to those of the fifth embodiment.

### [Seventh Embodiment]

A high frequency electronic component of a seventh embodiment of the invention will now be described with reference to FIG. 22. FIG. 22 shows a transmission circuit 7 including the high frequency electronic component 70 of the seventh embodiment. The high frequency electronic component 70 of the seventh embodiment is for use in the transmission circuit 7 that processes three UMTS transmission signals UMTS-L Tx, UMTS-H Tx1 and UMTS-H Tx2, and two GSM transmission signals GSM-L Tx and GSM-H Tx. The transmission signal GSM-L Tx includes a transmission signal of at least one of GSM850 (AGSM) and GSM900 (EGSM), which are two of the four systems shown in Table 1 and are close to each other in frequency band. The transmission signal GSM-H Tx includes a transmission signal of at least one of GSM1800 (DCS) and GSM1900 (PCS), which are the other two of the four systems shown in Table 1 and are close to each other in frequency band. The transmission signal UMTS-L Tx is a transmission signal of one of the bands V, VI and VIII whose frequency bands are close to those of GSM850 (AGSM) and GSM900 (ESGM). The transmission signals UMTS-H Tx1 and UMTS-H Tx2 are transmission signals of two different bands among the bands I, II, III, IV, IX and X whose frequency bands are close to those of GSM1800 (DCS) and GSM1900 (PCS). In the high frequency circuit including the transmission circuit 7 of the seventh embodiment, the IC 2 generates and outputs UMTS transmission signals UMTS-L Tx, UMTS-H Tx1 and UMTS-H Tx2 each in the form of an unbalanced signal, and GSM transmission signals GSM-L Tx and GSM-H Tx each in the form of a balanced signal.

The transmission circuit 7 of the seventh embodiment has three BPFs 73, 76 and 77, the high frequency electronic component 70 of the embodiment, two power amplifiers 14L and 14H, and two outputs 7L and 7H. The transmission signals UMTS-L Tx, UMTS-H Tx1 and UMTS-H Tx2 outputted from the IC 2 enter the BPFs 73, 76 and 77, respectively.

The high frequency electronic component 70 has input terminals 70a, 70b1, 70b2, 70c, 70d, 70e1 and 70e2, output terminals 70f and 70g, baluns 71 and 74, and switches 72 and 75. Each of the baluns 71 and 74 has two balanced inputs and an unbalanced output. The circuit configuration of each of the baluns 71 and 74 is the same as that of the balun 11 of the first embodiment.

The switch 72 has two input ports 72a and 72b and an output port 73c, and connects the output port 72c selectively to one of the input ports 72a and 72b. The switch 75 has three input ports 75a, 75b and 75c and an output port 75d, and connects the output port 75d selectively to one of the input ports 75a, 75b and 75c.

The input terminal 70a is connected to the output of the BPF 73 and the input port 72a of the switch 72. The input terminals 70b1 and 70b2 receive the transmission signal GSM-L Tx in the form of a balanced signal outputted from the IC 2. The two balanced inputs of the balun 71 are connected to the input terminals 70b1 and 70b2. The unbalanced output of the balun 71 is connected to the input port 72b of the switch 72. The input terminal 70c is connected to the output of the BPF 76 and the input port 75a of the switch 75. The input terminal 70d is connected to the output of the BPF 77 and the input port 75b of the switch 75. The input terminals 70e1 and 70e2 receive the transmission signal GSM-H Tx in the form of a balanced signal outputted from the IC 2. The two balanced inputs of the balun 74 are connected to the input terminals 70e1 and 70e2. The unbalanced output of the balun 74 is connected to the input port 75c of the switch 75.

The output port 72c of the switch 72 is connected to the output terminal 70f. The output terminal 70f is connected to the input of the power amplifier 14L. The output of the power amplifier 14L is connected to the output 7L. The output port 75c of the switch 75 is connected to the output terminal 70g. The output terminal 70g is connected to the input of the power amplifier 14H. The output of the power amplifier 14H is connected to the output 7H.

The high frequency electronic component 70 of the seventh embodiment corresponds to the first high frequency electronic component of the present invention. In the seventh embodiment, the transmission signals UMTS-L TX, UMTS-H Tx1 and UMTS-H Tx2 in the form of an unbalanced signal correspond to the first transmission signal in the first high frequency electronic component of the present invention, and the transmission signals GSM-L Tx and GSM-H Tx in the form of a balanced signal correspond to the second transmission signal in the first high frequency electronic component of the present invention. The input terminals 70a, 70c and 70d correspond to the first input terminal of the first high frequency electronic component of the present invention, and the input terminals 70b1, 70b2, 70e1 and 70e2 correspond to the second input terminal of the first high frequency electronic component of the present invention.

The input port 72a of the switch 72 and the input ports 75a and 75b of the switch 75 correspond to the first input port in the first high frequency electronic component of the present invention. The input port 72b of the switch 72 and the input port 75c of the switch 75 correspond to the second input port in the first high frequency electronic component of the present invention.

In the transmission circuit 7 including the high frequency electronic component 70, the transmission signal UMTS-L Tx in the form of an unbalanced signal outputted from the IC 2 passes through the BPF 73 and the input terminal 70a, and is received at the input port 72a of the switch 72. The transmission signal GSM-L Tx in the form of a balanced signal outputted from the IC 2 passes through the input terminals 70b1 and 70b2, and is converted by the balun 71 to a transmission signal GSM-L Tx in the form of an unbalanced signal. This transmission signal GSM-L Tx in the form of an unbalanced signal is received at the input port 72b of the switch 72. The switch 72 performs switching between the transmission signal UMTS-L Tx in the form of an unbalanced signal received at the input port 72a and the transmission signal GSM-L Tx in the form of an unbalanced signal received at the input port 72b, and outputs one of the transmission signals to the power amplifier 14L. The transmission signal received at the power amplifier 14L is amplified by the power amplifier 14L, and is outputted to the output 7L of the transmission circuit 7.

The transmission signal UMTS-H Tx1 in the form of an unbalanced signal outputted from the IC 2 passes through the BPF 76 and the input terminal 70c, and is received at the input port 75a of the switch 75. The transmission signal UMTS-H Tx2 in the form of an unbalanced signal outputted from the IC 2 passes through the BPF 77 and the input terminal 70d, and is received at the input port 75b of the switch 75. The transmission signal GSM-H Tx in the form of a balanced signal outputted from the IC 2 passes through the input terminals 70e1 and 70e2, and is converted by the balun 74 to a transmission signal GSM-H Tx in the form of an unbalanced signal. This transmission signal GSM-H Tx in the form of an unbalanced signal is received at the input port 75c of the switch 75. The switch 75 performs switching among the transmission signal UMTS-H Tx1 in the form of an unbalanced signal received at the input port 75a, the transmission signal UMTS-H Tx2 in the form of an unbalanced signal received at the input port 75b, and the transmission signal GSM-H Tx in the form of an unbalanced signal received at the input port 75c, and outputs one of the transmission signals to the power amplifier 14H. The transmission signal received at the power amplifier 14H is amplified by the power amplifier 14H, and is outputted to the output 7H of the transmission circuit 7.

In the seventh embodiment, the output 7L is connected to an input port of a switch (not shown) having the input port and two output ports. This switch selectively connects one of the two output ports to the input port, and outputs the transmission signals UMTS-L Tx and GSM-L Tx received at the input port from different ones of the output ports. The output 7H is connected to an input port of a switch (not shown) having the input port and three output ports. This switch selectively connects one of the three output ports to the input port, and outputs the transmission signals UMTS-H Tx1, UMTS-H Tx2 and GSM-H Tx received at the input port from different ones of the output ports.

Like the high frequency electronic component 10 of the first embodiment, the high frequency electronic component 70 of the seventh embodiment can be constructed by forming the baluns 71 and 74 using a plurality of conductor layers provided within the layered substrate 20 and by mounting the switches 72 and 75 on the layered substrate 20.

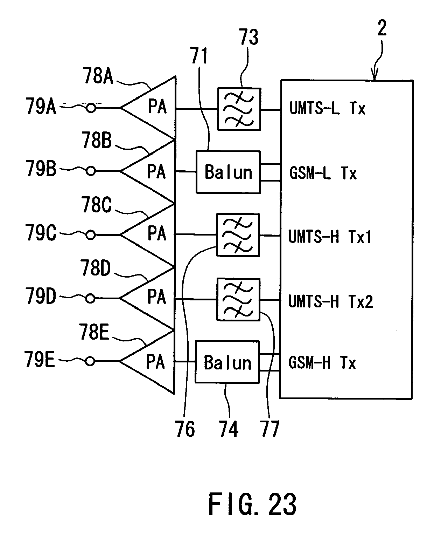

The advantages of the seventh embodiment will now be described with reference to a comparative example. FIG. 23 is a block diagram illustrating the circuit configuration of a transmission circuit of the comparative example. The transmission circuit of the comparative example has five power amplifiers 78A, 78B, 78C, 78D and 78E and five outputs 79A, 79B, 79C, 79D and 79E, instead of the switches 72 and 75, the power amplifiers 14L and 14H and the outputs 7L and 7H of the transmission circuit shown in FIG. 22. In the transmission circuit of the comparative example, the transmission signal UMTS-L Tx in the form of an unbalanced signal outputted from the BPF 73 is amplified by the power amplifier 78A, and is outputted from the output 79A. The transmission signal GSM-L Tx in the form of an unbalanced signal outputted from the balun 71 is amplified by the power amplifier 78B, and is outputted from the output 79B. The transmission signal UMTS-H Tx1 in the form of an unbalanced signal outputted from the BPF 76 is amplified by the power amplifier 78C, and is outputted from the output 79C. The transmission signal UMTS-H Tx2 in the form of an unbalanced signal outputted from the BPF 77 is amplified by the power amplifier 78D, and is outputted from the output 79D. The transmission signal GSM-H Tx in the form of an unbalanced signal outputted from the balun 74 is amplified by the power amplifier 78E, and is outputted from the output 79E.

The comparative example shown in FIG. 23 requires five power amplifiers, each of which is relatively expensive. This impedes reductions in size and cost of the transmission circuit and the high frequency circuit of a cellular phone including the transmission circuit. In contrast, according to the seventh embodiment, a single power amplifier 14L is used in common for the transmission signals UMTS-L Tx and GSM-L Tx that are in frequency bands close to each other, and a single power amplifier 14H is used in common for the transmission signals UMTS-H Tx1, UMTS-H Tx2 and GSM-H Tx that are in frequency bands close to each other. Compared with the comparative example, the seventh embodiment thus allows a reduction in the number of power amplifiers to be included in the transmission circuit 7 by three, and thereby allows reductions in size and cost of the transmission circuit 7 and the high frequency circuit of a cellular phone including the transmission circuit 7.

Like the first to third modification examples of the first embodiment, the high frequency electronic component of the seventh embodiment may include the power amplifiers 14L and 14H, or the BPFs 73, 76 and 77, or both the power amplifiers 14L, 14H and the BPFs 73, 76, 77, in addition to the baluns 71 and 74 and the switches 72 and 75. The remainder of configuration, functions and advantages of the seventh embodiment are similar to those of the first embodiment.

### [Eighth Embodiment]

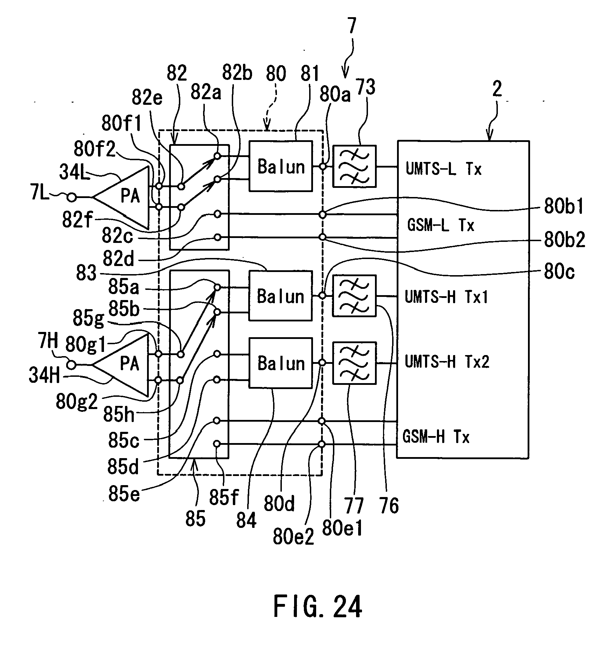

A high frequency electronic component of an eighth embodiment of the invention will now be described with reference to FIG. 24. FIG. 24 shows a transmission circuit 7 including the high frequency electronic component 80 of the eighth embodiment. The transmission circuit 7 of the eighth embodiment includes balanced-input power amplifiers 34L and 34H each having two balanced inputs and an unbalanced output, instead of the power amplifiers 14L and 14H of the seventh embodiment. The transmission circuit 7 of the eighth embodiment includes the high frequency electronic component 80 instead of the high frequency electronic component 70 of the seventh embodiment.

The high frequency electronic component 80 has input terminals 80a, 80b1, 80b2, 80c, 80d, 80e1 and 80e2, output terminals 80f1, 80f2, 80g1 and 80g2, baluns 81, 83 and 84, and switches 82 and 85. Each of the baluns 81, 83 and 84 has an unbalanced input and two balanced outputs. The circuit configuration of each of the baluns 81, 83 and 84 is the same as that of the balun 31 of the second embodiment.

The switch 82 has four input ports 82a, 82b, 82c and 82d, and two output ports 82e and 82f. The switch 82 is capable of switching between a state in which the output port 82e is connected to the input port 82a while the output port 82f is connected to the input port 82b and a state in which the output port 82e is connected to the input port 82c while the output port 82f is connected to the input port 82d.

The switch 85 has six input ports 85a, 85b, 85c, 85d, 85e and 85f, and two output ports 85g and 85h. The switch 85 is capable of switching among a state in which the output port 85g is connected to the input port 85a while the output port 85h is connected to the input port 85b, a state in which the output port 85g is connected to the input port 85c while the output port 85h is connected to the input port 85d, and a state in which the output port 85g is connected to the input port 85e while the output port 85h is connected to the input port 85f.

The input terminal 80a is connected to the output of the BPF 73 and the unbalanced input of the balun 81. The two balanced outputs of the balun 81 are connected to the input ports 82a and 82b of the switch 82. The input terminals 80b1 and 80b2 are connected to the input ports 82c and 82d of the switch 82. The output ports 82e and 82f of the switch 82 are connected to the output terminals 80f1 and 80f2.

The input terminal 80c is connected to the output of the BPF 76 and the unbalanced input of the balun 83. The input terminal 80d is connected to the output of the BPF 77 and the unbalanced input of the balun 84. The two balanced outputs of the balun 83 are connected to the input ports 85a and 85b of the switch 85. The two balanced outputs of the balun 84 are connected to the input ports 85c and 85d of the switch 85. The input terminals 80e1 and 80e2 are connected to the input ports 85e and 85f of the switch 85. The output ports 85g and 85h of the switch 85 are connected to the output terminals 80g1 and 80g2.

In the eighth embodiment, the input ports 82a and 82b of the switch 82 and the input ports 85a, 85b, 85c and 85d of the switch 85 correspond to the first input port in the second high frequency electronic component of the present invention. The input ports 82c and 82d of the switch 82 and the input ports 85e and 85f of the switch 85 correspond to the second input port in the second high frequency electronic component of the present invention.

In the transmission circuit 7 including the high frequency electronic component 80, the transmission signal UMTS-L Tx in the form of an unbalanced signal outputted from the IC 2 passes through the BPF 73, and is received at the input terminal 80a of the high frequency electronic component 80. The balun 81 converts the transmission signal UMTS-L Tx in the form of an unbalanced signal received at the input terminal 80a to a transmission signal UMTS-L Tx in the form of a balanced signal and outputs this signal. The transmission signal GSM-L Tx in the form of a balanced signal outputted from the IC 2 are received at the input terminals 80b1 and 80b2 of the high frequency electronic component 80.

The transmission signal UMTS-H Tx1 in the form of an unbalanced signal outputted from the IC 2 passes through the BPF 76, and is received at the input terminal 80c of the high frequency electronic component 80. The transmission signal UMTS-H Tx2 in the form of an unbalanced signal outputted from the IC 2 passes through the BPF 77, and is received at the input terminal 80d of the high frequency electronic component 80. The balun 83 converts the transmission signal UMTS-H Tx1 in the form of an unbalanced signal received at the input terminal 80c to a transmission signal UMTS-H Tx1 in the form of a balanced signal and outputs this signal. The balun 84 converts the transmission signal UMTS-H Tx2 in the form of an unbalanced signal received at the input terminal 80d to a transmission signal UMTS-H Tx2 in the form of a balanced signal and outputs this signal. The transmission signal GSM-H Tx in the form of a balanced signal outputted from the IC 2 is received at the input terminals 80e1 and 80e2 of the high frequency electronic component 80.

The input ports 82a and 82b of the switch 82 receive the transmission signal UMTS-L Tx in the form of a balanced signal outputted from the balun 81. The input ports 82c and 82d of the switch 82 receive the transmission signal GSM-L Tx in the form of a balanced signal received at the input terminals 80b1 and 80b2. The switch 82 performs switching between the transmission signal UMTS-L Tx in the form of a balanced signal received at the input ports 82a and 82b and the transmission signal GSM-L Tx in the form of a balanced signal received at the input ports 82c and 82d, and outputs one of the transmission signals from the output ports 82e and 82f to the power amplifier 34L. The transmission signal received at the power amplifier 34L is amplified by the power amplifier 34L, and is outputted to the output 7L of the transmission circuit 7 as a transmission signal in the form of an unbalanced signal.

The input ports 85a and 85b of the switch 85 receive the transmission signal UMTS-H Tx1 in the form of a balanced signal outputted from the balun 83. The input ports 85c and 85d of the switch 85 receive the transmission signal UMTS-H Tx2 in the form of a balanced signal outputted from the balun 84. The input ports 85e and 85f of the switch 85 receive the transmission signal GSM-H Tx in the form of a balanced signal received at the input terminals 80e1 and 80e2. The switch 85 performs switching among the transmission signal UMTS-H Tx1 in the form of a balanced signal received at the input ports 85a and 85b, the transmission signal UMTS-H Tx2 in the form of a balanced signal received at the input ports 85c and 85d, and the transmission signal GSM-H Tx in the form of a balanced signal received at the input ports 85e and 85f, and outputs one of the transmission signals from the output ports 82g and 82h to the power amplifier 34H. The transmission signal received at the power amplifier 34H is amplified by the power amplifier 34H, and is outputted to the output 7H of the transmission circuit 7 as a transmission signal in the form of an unbalanced signal.

Like the high frequency electronic component 10 of the first embodiment, the high frequency electronic component 80 of the eighth embodiment can be constructed by forming the baluns 81, 83 and 84 using a plurality of conductor layers provided within the layered substrate 20 and by mounting the switch 82 and 85 on the layered substrate 20.

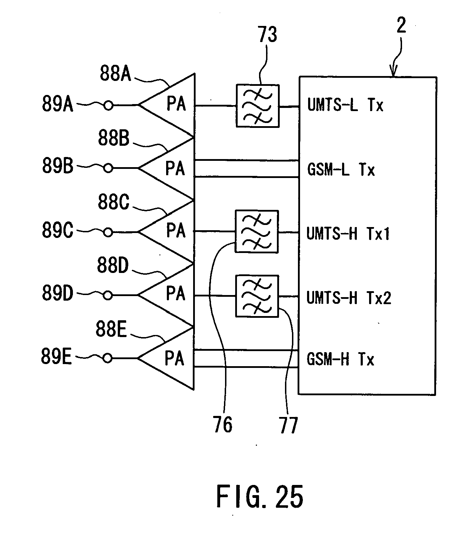

The advantages of the eighth embodiment will now be described with reference to a comparative example. FIG. 25 is a block diagram illustrating the circuit configuration of a transmission circuit of the comparative example. The transmission circuit of the comparative example has five power amplifiers 88A, 88B, 88C, 88D and 88E and five outputs 89A, 89B, 89C, 89D and 89E, instead of the baluns 81, 83 and 84, the switches 82 and 85, the power amplifiers 34L and 34H and the outputs 7L and 7H of the transmission circuit shown in FIG. 24. In the transmission circuit of the comparative example, the transmission signal UMTS-L Tx in the form of an unbalanced signal outputted from the BPF 73 is amplified by the power amplifier 88A, and is outputted from the output 89A. The transmission signal GSM-L Tx in the form of a balanced signal outputted from the IC 2 is amplified by the power amplifier 88B, and is outputted from the output 89B as a transmission signal GSM-L Tx in the form of an unbalanced signal. The transmission signal UMTS-H Tx1 in the form of an unbalanced signal outputted from the BPF 76 is amplified by the power amplifier 88C, and is outputted from the output 89C. The transmission signal UMTS-H Tx2 in the form of an unbalanced signal outputted from the BPF 77 is amplified by the power amplifier 88D, and is outputted from the output 89D. The transmission signal GSM-H Tx in the form of a balanced signal outputted from the IC 2 is amplified by the power amplifier 88E, and is outputted from the output 89E as a transmission signal GSM-H Tx in the form of an unbalanced signal.

The comparative example shown in FIG. 25 requires five power amplifiers, each of which is relatively expensive. This impedes reductions in size and cost of the transmission circuit and the high frequency circuit of a cellular phone including the transmission circuit. In contrast, according to the eighth embodiment, a single power amplifier 34L is used in common for the transmission signals UMTS-L Tx and GSM-L Tx that are in frequency bands close to each other, and a single power amplifier 34H is used in common for the transmission signals UMTS-H Tx1, UMTS-H Tx2 and GSM-H Tx that are in frequency bands close to each other. Compared with the comparative example, the eighth embodiment thus allows a reduction in the number of power amplifiers to be included in the transmission circuit 7 by three, and thereby allows reductions in size and cost of the transmission circuit 7 and the high frequency circuit of a cellular phone including the transmission circuit 7.

In the eighth embodiment, the switch 82 may be replaced with two switches each of which selectively connects one of two input ports to a single output port. The switch 85 may be replaced with two switches each of which selectively connects one of three input ports to a single output port.

Like the first to third modification examples of the first embodiment, the high frequency electronic component 80 of the eighth embodiment may include the power amplifiers 34L and 34H, or the BPFs 73, 76 and 77, or both the power amplifiers 34L, 34H and the BPFs 73, 76, 77, in addition to the baluns 81, 83 and 84 and the switches 82 and 85. The remainder of configuration, functions and advantages of the eighth embodiment are similar to those of the seventh embodiment.

The present invention is not limited to the foregoing embodiments but can be carried out in various modifications. For example, the present invention is applicable not only to a transmission circuit of a cellular phone but also to any transmission circuit that processes a plurality of transmission signals.

In each of the embodiments, in the case where the high frequency electronic component does not include the power amplifier, the input terminal and the output terminal of the high frequency electronic component may be reversed. This allows the high frequency electronic component to function to separate a plurality of reception signals into a reception signal in the form of an unbalanced signal and a reception signal in the form of a balanced signal and output such reception signals. For example, for the high frequency electronic component 10 of the first embodiment shown in FIG. 2 and FIG. 3, by letting the terminal 10c serve as an input terminal and the terminals 10a, 10b1 and 10b2 serve as output terminals, it becomes possible for the high frequency electronic component 10 to function in the following manner, for example. The terminal 10c receives a UMTS reception signal UMTS Rx in the form of an unbalanced signal or a GSM reception signal GSM Rx in the form of an unbalanced signal. The switch 12 connects one of the ports 12a and 12b to the port 12c according to the type of the reception signal received, and thereby outputs the reception signal UMTS Rx from the port 12a to the terminal 10a and the reception signal GSM Rx from the port 12b to the balun 11. The balun 11 converts the reception signal GSM Rx in the form of an unbalanced signal to a reception signal GSM Rx in the form of a balanced signal, and outputs this signal from the terminals 10b1 and 10b2. The high frequency electronic components of any other embodiments can also be used in the same manner with their input terminals and the output terminals reversed.

It is apparent that the present invention can be carried out in various forms and modifications in the light of the foregoing descriptions. Accordingly, within the scope of the following claims and equivalents thereof, the present invention can be carried out in forms other than the foregoing most preferable embodiments.

## Claims

1. A high frequency electronic component for use in a transmission circuit that processes a plurality of transmission signals, the high frequency electronic component comprising:
a first input terminal that receives a first transmission signal in the form of an unbalanced signal;
a second input terminal that receives a second transmission signal in the form of a balanced signal;
a balun that converts the second transmission signal in the form of a balanced signal received at the second input terminal to a second transmission signal in the form of an unbalanced signal and outputs this signal; and
a switch having a first input port, a second input port and an output port, the switch performing switching between a signal received at the first input port and a signal received at the second input port, and outputting one of the signals from the output port, wherein:
the first input port receives the first transmission signal received at the first input terminal;
the second input port receives the second transmission signal in the form of an unbalanced signal outputted from the balun; and
the output port is connected to a power amplifier that amplifies the signal outputted from the output port.

2. The high frequency electronic component according to claim 1, further comprising the power amplifier.

3. The high frequency electronic component according to claim 1, further comprising a band-pass filter provided between the first input terminal and the first input port.

4. The high frequency electronic component according to claim 1, further comprising a capacitor provided in at least one of signal paths that are respectively connected to the first input port, the second input port and the output port.

5. The high frequency electronic component according to claim 1, further comprising a layered substrate including a plurality of dielectric layers stacked, wherein the layered substrate further includes a plurality of conductor layers provided within the layered substrate, the balun is formed using the plurality of conductor layers, and the switch is mounted on the layered substrate.

6. A high frequency electronic component for use in a transmission circuit that processes a plurality of transmission signals, the high frequency electronic component comprising:
a first input terminal that receives a first transmission signal in the form of an unbalanced signal;
a second input terminal that receives a second transmission signal in the form of a balanced signal;
a balun that converts the first transmission signal in the form of an unbalanced signal received at the first input terminal to a first transmission signal in the form of a balanced signal and outputs this signal; and
a switch having a first input port, a second input port and an output port, the switch performing switching between a signal received at the first input port and a signal received at the second input port, and outputting one of the signals from the output port, wherein:
the first input port receives the first transmission signal in the form of a balanced signal outputted from the balun;
the second input port receives the second transmission signal received at the second input terminal; and
the output port is connected to a power amplifier that amplifies the signal outputted from the output port.

7. The high frequency electronic component according to claim 6, further comprising the power amplifier.

8. The high frequency electronic component according to claim 6, further comprising a band-pass filter provided between the first input terminal and the balun.

9. The high frequency electronic component according to claim 6, further comprising a capacitor provided in at least one of signal paths that are respectively connected to the first input port, the second input port and the output port.

10. The high frequency electronic component according to claim 6, further comprising a layered substrate including a plurality of dielectric layers stacked, wherein the layered substrate further includes a plurality of conductor layers provided within the layered substrate, the balun is formed using the plurality of conductor layers, and the switch is mounted on the layered substrate.
